# EUROPEAN PATENT APPLICATION

(11) **EP 4 492 723 A2**
(43) Date of publication of application: **15.01.2025**
(21) Application number: 24174425.9
(22) Date of filing: 07.05.2024
(51) Int. Cl.: H04L 5/00

(54) **DOWNLINK MEASUREMENTS CONFIGURATION AND REPORTING WITH DOWNLINK RX INDICATOR**

(30) Priority: 22.05.2023 US 202363503518 P
(71) Applicant: Nokia Technologies Oy, 02610 Espoo (FI)
(72) Inventor: BONFANTE, Andrea, Paris (FR); VOOK, Frederick, Schaumburg (US); AHMADIAN TEHRANI, Amir Mehdi, Munich (DE); LADDU, Keeth Saliya Jayasinghe, Espoo (FI); SANGUANPUAK, Tachporn, Oulu (FI); ENESCU, Mihai, Espoo (FI)
(74) Representative: Nokia EPO representatives

(57) **Abstract**

Various examples of embodiments described herein relate to methods and apparatuses for optimized conditional transactions. One such example of an embodiment relates to an apparatus caused to obtain a downlink, DL, reception, Rx, indicator for measuring DL transmission, Tx, beams and/or Tx-Rx beam pairs, the DL Rx indicator indicative of a Rx antenna panel and/or a Rx beam to be used and/or used by the apparatus for reference signal measurements; perform reference signal measurements on at least one received reference signal by using the Rx antenna panel and/or the Rx beam indicative in the DL Rx indicator, wherein a reference signal of the at least one received reference signal is associated with a respective Tx beam; and report a measurement result of the performed reference signal measurements.

## Description

### Technical Field

Various examples of embodiments described herein relate to a method and an apparatus for downlink measurements configuration and reporting with downlink reception indicator.

### Background

Overtime, an increasing extension of communication networks has taken place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication networks and access environments.

By way of example, 3GPP defines 5G Core Network Function's (NF's) interfaces and relevant Application Programming Interfaces (APIs) for each NF to communicate between NFs.

### SUMMARY

Various examples of embodiments described in the subject disclosure provide certain advantages, for example in the form of one or more improvements that are either explicitly described herein or otherwise apparent to a person skilled in the art from the subject disclosure. Hence, at least some examples of embodiments of the subject disclosure aim to provide (or otherwise contribute to) at least part of the aforementioned advantages and improvements.

Various aspects of examples of embodiments of the subject disclosure are set forth in the claims and pertain to methods, apparatuses and computer program products in the context of downlink measurements configuration and reporting with downlink reception indicator.

At least some of aforementioned advantages and improvements may be achieved through the methods, apparatuses and non-transitory storage media as specified in the claims. Further advantages and improvements may be achieved through the methods, apparatuses and non-transitory storage media set forth in respective dependent claims.

Any one of the aspects mentioned according to the claims facilitates downlink measurements configuration and reporting with downlink reception indicator, thereby providing at least part of the aforementioned advantages and improvements.

In more detail, the subject disclosure describes downlink measurements configuration and reporting with downlink reception indicator, which may, according to some examples of embodiments, prove advantageous over a proprietary solution for at least the following reasons.

Examples of embodiments described in the subject disclosure may, for instance, realize to avoid reporting inaccurate reference signal received power (RSRP) measurements, like L1-RSRP measurements, due to changes of the user equipment (UE) antenna panel and downlink (DL) reception (Rx) beam used for DL transmission (Tx) beam or DL Tx-Rx beam pair measurements. Further, it may, for instance, realize to avoid using inaccurate measurements network (NW) side for determining, for e.g. an artificial intelligence (Al)/machine learning (ML) model, model input and ground-truth model output (e.g., beam RSPRs or Top-1 beam ID) during model training, update/fine-tuning and monitoring operations. Moreover, it may, for instance, realize to avoid using for NW side beam management (BM) prediction model measurements performed at the UE without knowing the antenna panel and/or DL Rx beam used.

It shall be noted that the term "signal(s)" may refer to DL reference signals transmitted via a plurality of DL Tx beams. DL reference signals may be channel state information reference signal (CSI-RS) and synchronization signal block (SSB) signal. Further, the term "measurements" may refer to DL measurements performed by a UE and consisting of L1-RSRP measurements corresponding to DL Tx beam(s) transmitted on DL reference signals resources. Additionally, DL Tx beams may be wide angular beams transmitted with periodical SSBs. DL Tx beams may also be narrow beams transmitted with periodic/aperiodic CSI-RSs.

Further advantages may become apparent to a person skilled in the art from the following detailed description.

### BRIEF DESCRIPTION OF THE DRAWINGS

Some examples of embodiments of the subject disclosure are described below, by way of example only, with reference to the accompanying drawings, in which:
FIG. 1 shows a sound reference signal (SRS) uplink (UL) transmission configuration according to various examples of embodiments of the subject disclosure;
FIG. 2 shows representations of features "Enhanced L1-RSRP Measurements Configuration" and "Enhanced L1-RSRP Measurements Reporting" to be used for NW side model for beam management prediction, according to various examples of embodiments of the subject disclosure;
FIG. 3 shows a signaling diagram representing the enhanced L1-RSRP Measurements configuration to be used for NW-sided AI/ML based beam management model operations, according to various examples of embodiments of the subject disclosure;
FIG. 4 shows a signaling diagram representing the enhanced L1-RSRP Measurements reporting to be used for AI/ML based beam management model operations, according to various examples of embodiments of the subject disclosure;
FIG. 5 shows a NW-side model usage of the DL Rx indicator according to various examples of embodiments of the subject disclosure;
FIG. 6 shows a flowchart illustrating steps corresponding to an example method according to various examples of embodiments of the subject disclosure;
FIG. 7 shows a flowchart illustrating steps corresponding to an example method according to various examples of embodiments of the subject disclosure;
FIG. 8 shows a flowchart illustrating steps corresponding to an example method according to various examples of embodiments of the subject disclosure;
FIG. 9 shows a flowchart illustrating steps corresponding to an example method according to various examples of embodiments of the subject disclosure;
FIG. 10 shows a flowchart illustrating steps corresponding to an example method according to various examples of embodiments of the subject disclosure;
FIG. 11 shows a block diagram illustrating an example apparatus according to various examples of embodiments of the subject disclosure;
FIG. 12 shows a block diagram illustrating an example apparatus according to various examples of embodiments of the subject disclosure;
FIG. 13 shows a block diagram illustrating an example apparatus according to various examples of embodiments of the subject disclosure; and
FIG. 14 shows a block diagram illustrating an example apparatus according to various examples of embodiments of the subject disclosure.

### DEATILED DESCRIPTION

In general, two or more end points involved in a communication may be implemented as a particular type of end point (e.g. a communication station or element or function, such as a terminal device, user equipment (UE), or other communication network element, a database, a server, host, etc.), or as one or more network elements or functions (e.g. virtualized network functions), such as communication network control elements or functions, for example access network elements like access points (APs), radio base stations (BSs), relay stations, eNBs, gNBs etc., and core network elements or functions, for example control nodes, support nodes, service nodes, gateways, user plane functions, access and mobility functions, etc.. These end points may belong to a single communication network system, different communication network systems, or a combination of at least one same communication network system and at least one different communication network system.

In the following, various examples of embodiments will be described using, as an example of a communication network to which examples of embodiments may be applied, a communication network architecture based on 3GPP standards for a communication network, such as a 5G/NR, without restricting the examples of embodiments to such an architecture. It, however, is obvious for a person skilled in the art that the examples of embodiments may also be applied to other kinds of communication networks like 4G and/or LTE (and even 6G and higher) where mobile communication principles are integrated, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but the subject disclosure can be extended and applied to any other type of communication network, such as a wired communication network or datacenter networking.

The following examples of embodiments are to be understood only as illustrative in nature. Although portions of the subject disclosure may refer to the expressions "an", "one", or "some" example(s) of embodiment(s) in several specific locations, this does not necessarily mean that each such reference is related to the same example(s) of embodiment(s), or that the described feature only applies to a single example of an embodiment. Individual features from different examples of embodiments may also be combined to provide other examples of embodiments. Furthermore, terms like "comprising" and "including" should be understood as not limiting the described examples of embodiments to consist of only those features that have been mentioned; such examples of embodiments can also contain features, structures, units, modules etc. that have not been specifically mentioned.

A simplified system architecture of a (tele)communication network including a mobile communication system, where some examples of embodiments, are applicable may include an architecture of one or more communication networks. The one or more communication networks may include wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit (CU), which controls a respective coverage area or cell(s) and with which one or more communication stations such as communication elements or functions, like user devices (e.g. customer devices), mobile devices, or terminal devices, like a UE, endpoint terminal or another device having a similar function, such as a modem chipset, a chip, a module etc., which can also be part of a station, an element, a function or an application configured to conduct a communication, such as a UE, an element or function usable in a machine-to-machine communication architecture, or attached as a separate element to such an element, function or application capable of conducting a communication, or the like, are configured to communicate via one or more channels via one or more communication beams for transmitting several types of data in a plurality of access domains. Furthermore, (core) network elements or network functions ((core) network control elements or network functions, (core) network management elements or network functions), such as gateway network elements/functions, mobility management entities, a mobile switching center, servers, databases and the like may be included.

Functions and interconnections of the described elements and functions, which also depend on the actual network type, are apparent to those skilled in the art and may be described in corresponding specifications, so that a description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

It should be appreciated that according to some examples of embodiments, a socalled "liquid" or flexible network concept may be implemented where the operations and functionalities of a network element, a network function, or of another entity of the network, may be performed in different entities or functions, such as in a node, host or server, in a flexible manner. Thus, a "division of labor" between involved network elements, functions or entities may vary case by case.

The subject disclosure, in some examples of embodies, relates to downlink measurements configuration and reporting with DL Rx indicator and further relates to AI/ML-based beam management.

To support a new AI/ML-enabled radio interface for the next cellular systems, 3GPP is currently investigating a new study item (RP-213599) for Release 18. The different pilot use cases for applying AI/ML model in the new radio (NR) radio interface are channel state information (CSI) overhead reduction, beam management, and positioning. AI/ML-based beam management targets spatial and/or time beam prediction for overhead and latency reduction.

The different pilot use cases will also serve to identify a common AI/ML framework, including functional requirements of AI/ML architecture, which could be used in subsequent releases and will pave the way for the foundations of the next 6G networks. The study should also identify areas where AI/ML could improve the performance of air-interface functions. Specification impact will be assessed to improve the overall understanding of what would be required to enable AI/ML techniques for the air interface. The beam management use case is further studied for spatial and/or time beam prediction. The scope of spatial beam prediction (BM-Case1) is to predict the best Tx/Rx beams in different spatial locations. Conversely, time-domain beam predictions (BM-Case2) aim to predict the most likely beam to use for next time instants.

Both BM-Case 1 and BM-Case 2 sub-use cases utilize L1-RSRP measurements taken on SetA (prediction set) and SetB beams (measurement set) during the model training and inference operations. Due to RF impairments and other baseband components, the L1-RSRP measurements are affected by errors. The range of measurement errors for FR1/FR2 is set by current L1-RSRP requirements defined in Clauses 10.1.20 of TS 38.133. One main difference between FR1 and FR2 requirements is that in FR2, the measurement error accounts for the beamforming at the UE. Specifically, UE may change the Rx beam while measuring the Tx beam and the received signal may be received by different RF chains increasing the errors due to the RF impairments.

In addition to the RF impairments, other sources for measurements errors may include channel fading conditions due to the movement of the UE for both mobility and UE rotation. The channel between the NW node and the UE changes continuously and the UE may report measurements performed in highly variable channel conditions. To avoid signal degradation, the UE may also decide to switch the antenna panel. Therefore, the measurements may be performed at the UE with one or more antenna panels. For instance, due to hand blockage, the measurements from one antenna panel may become highly unreliable and the UE may switch antenna panel to avoid any further degradation. Nevertheless, the number of active antenna panels and their selection details are usually left to the UE device implementation. Thus, the NW may use for the model input/output measurements reported from multiple UE panels as it is not aware of switching panel at the UE.

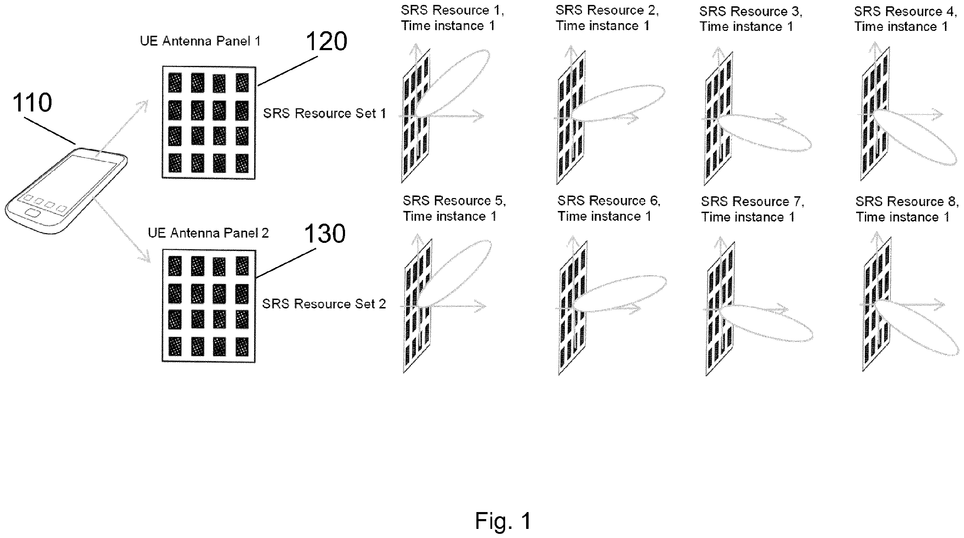

The SRS resources allocation is based on the UE transmitting the capability report to NW detailing the Tx configuration (codebook based or non-codebook based), the number of antenna panels, and other information. Later, the UE is configured with the number of SRS Resource Sets via radio resource control (RRC) signaling. For instance, with reference to FIG.1, when the UE 110 has two antenna panels 120 and 130, two SRS Resource Sets are configured. It shall be noted that the terms "reference signal resources" and "reference signal resource set" may refer to UL Sounding Reference Signal (SRS) resources and SRS resource set, where SRS resource mean the location of SRS in time and frequency domain in the UL resource grid corresponding to the UE Tx antenna panel and/or Tx beam for UL transmission.

In FR2 the beam correspondence should be mandatorily supported by the UE. Therefore, the UE includes beam correspondence capability in the report. If not supported, the UE may transmit multiple SRSs to determine the best UL Tx beam. In this case, the UE is configured with multiple SRS Resource Sets for UL beam measurements, as illustrated in FIG. 1. In this configuration, a single SRS Resource can be transmitted from each set simultaneously to allow multiple panels to be measured simultaneously.

The NW may configure multiple SRS Resources for each SRS Resource Set (e.g., 2 SRS Resource Set as depicted in FIG. 1) so that the UE sweeps multiple UL Tx beams for successive time instances (e.g., 4 different UL Tx beams). Each SRS Resource in the SRS Resource Set is configured to be transmitted with a different symbol position - so that it becomes active at a specific time. With this approach, the NW determines the best received SRS signal and feedbacks the identifier of the corresponding SRS Resources (e.g. one identifier in the range 1,...,8). Finally, the UE uses the best Tx antenna panel and Tx beam for UL transmission. To note that SRS Resource Sets may be pre-configured from RRC signaling and does not entail the UL transmission.

In RAN1#112bis-e, an agreement was made regarding additional aspects of data collection for NW-side AI/ML model, where it can be seen that information associated with the reported samples has been identified as an additional aspect to be considered on data collection for NW-side AI/ML model.

Based on the detailed information outlined above, at least one of the following technical problems may need to be solved.

Namely, measurements inaccuracies due to the UE antenna panel switching, DL Rx beam switching and, measurements errors may affect both NW and UE side models. Especially for the NW-side model, since the NW node may not be aware of the UE antenna panel and the Rx beam used during the measurements, the NW node may utilize inaccurate measurements during inference, training, updating/fine-tuning and model monitoring.

Measurement inaccuracies may affect both the input and output of the model. The inaccuracies in the L1-RSRP values included in the measurements report for SetB beams (measurement set) may affect the model input. At the same time, when UE reports the complete SetA of beams (prediction set), the measurement errors may also affect the training, update and performance monitoring, because the Top-1 and/or Top-K best beams or beam pairs (used as ground truth for model output) are determined based on the ranking of the L1-RSRP values from the measurements of SetA beams - which is affected by inaccuracies.

Moreover, the Tx-Rx beam pairs prediction model requires collecting multiple Tx-Rx beam pairs measurements differentiating between the measurements performed with the same Tx beam and different Rx beams. However, to avoid disclosing proprietary information, there is no explicit information about the Rx beam used to measure the Tx-Rx beam pairs that are communicated by the UE to the NW node. This lack of knowledge at the NW node precludes training and performing inference about the Tx-Rx beam pairs at the NW side. As such, an indication of resources within SRS resources indicating L1-RSRP measurements can be reported as an additional aspect for NW sided model data collection or performance monitoring (aligned with mentioned FFS from above RAN1#112bis-e).

Hence, in brief, the present specification aims at solving at least part of the following problems:
- To avoid reporting inaccurate L1-RSRP measurements due to changes of the UE antenna panel and DL Rx beam used for DL Tx beam or DL Tx-Rx beam pair measurements. Inaccurate measurements may be used by NW side for determining the model input and ground-truth model output (e.g., beam RSPRs or Top-1 beam ID) during model training, update/fine-tuning and monitoring operations.
- To avoid using for NW side BM prediction model measurements performed at the UE without knowing the antenna panel and/or DL Rx beam used.

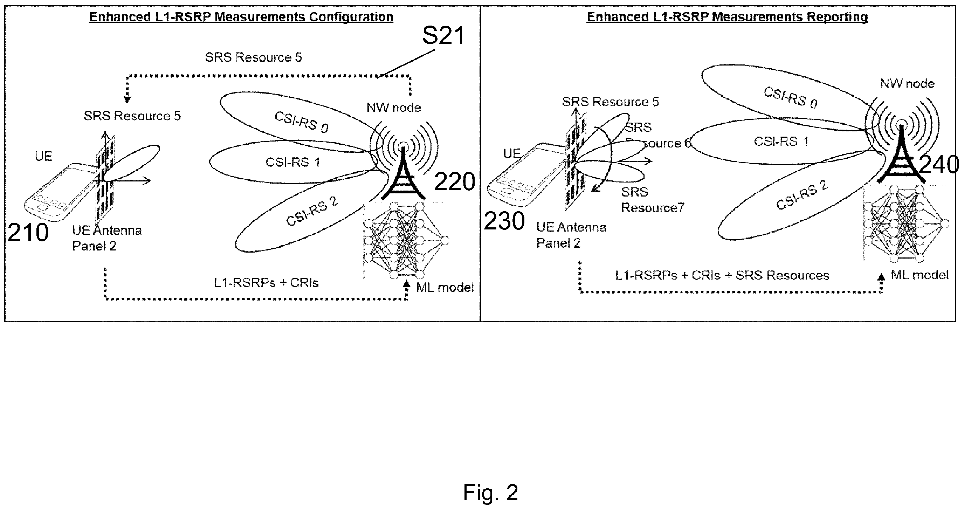

Referring now to FIG. 2, FIG: 2 shows representations of features "Enhanced L1-RSRP Measurements Configuration" and "Enhanced L1-RSRP Measurements Reporting" to be used for NW side model for beam management prediction, according to various examples of embodiments of the subject disclosure

Features introduced by the present specification are represented at high level in FIG.2 and are summarized as follows:
The NW node 220 may indicate (illustrated as an example only by S21) a DL Rx indicator to the UE 210 (i.e. the UE 210 may obtain, like e.g. receive, the DL Rx indicator provided from the NW node 220) in a configuration message or in a dynamic message or via an implicit manner for measuring DL Tx beams or Tx-Rx beam pairs:
- The indicator may include the SRS resource set indicator used to identify the SRS resources belonging to the antenna panel for UL SRS transmission and corresponding to the antenna panel used by UE for measuring the DL L1-RSRP.
- The indicator may include the SRS resource corresponding to the DL Rx beam to be used by the UE for measuring the DL L1-RSRP.
- The indicator may be separately configured for all the reference signals (RSs) (CSI-RS or SSB) or configured for more than one RSs.
- In another variant (where the NW node 240 may not indicate a DL Rx indicator), the UE 230 may derive the indicator implicitly based on another indication, wherein another indication may be associated with an SRS resource set or SRS resource applicable for the latest UL transmissions. E.g., when the UL transmissions are associated with a given SRS resource set or SRS resource, as these indications are coming separately for UL transmission scheduling, the UE 230 may assume same indications are applied for measuring DL Tx beams.
- In one another variant, the UE 230 may derive the indicator implicitly based on TCI state applicable for the latest DL channels. E.g., when the DL PDCCH/PDSCH receptions at the UE 230 use a DL Rx beam, the same DL Rx may be assumed when reporting beam measurements.

From the DL Rx indicator, the UE 210 may determine the Rx antenna panel and/or Rx beam to be used for DL measurements as follows:
   - Determine UL Tx antenna panel/Tx beam corresponding to the DL Rx indicator received from NW in configuration message.
   - Determine DL Rx antenna panel/Rx beam from UL Tx antenna panel/Tx beam. If there is DL/UL beam correspondence DL Rx antenna panel/Rx beam may be the same as UL Tx antenna panel/Tx beam.
A UE 230 that performs the L1-RSRP measurements corresponding to the DL Tx beam or Tx-Rx beam pairs may include in the report a DL Rx indicator determined as follows:
   - The indicator may include the same information as described above.
   - The indicator may be determined by the UE 230 as follows: i) determine UL Tx Antenna Panel/Tx beam from DL Rx antenna panel/Rx beam used by the UE for measuring the DL L1-RSRP; and ii) determine DL Rx indicator based on UL Tx antenna panel and/or Tx beam used by the UE 230 to transmit on the corresponding SRS resource.
   - For the case of implicit indication of the DL Rx beam, the UE 230 shall perform the L1-RSRP measurements corresponding to the implicitly indicated/defined DL Rx beam, and the NW node 240 (e.g. a gNB) can assume that the DL Tx beam or Tx-Rx beam pairs included in the report assumed such DL Rx beam. It shall be noted that the term "report" may refer to CSI-Report: UE reports measurement report including SSB resource indicator or CSI-RS resource indicator and L1-RSRP measurements of N-best Tx beam, the report may include the DL Rx indicator

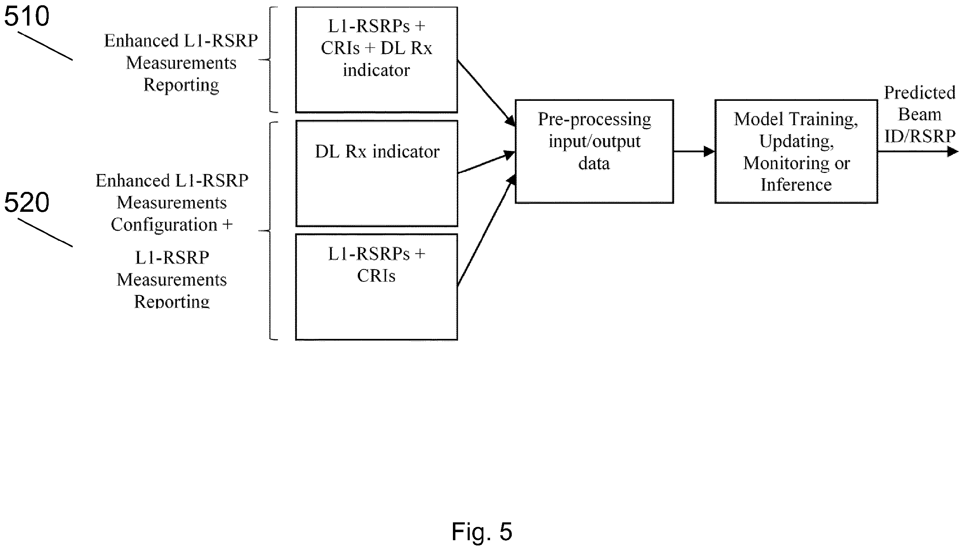

The NW node 220 and 240 may pre-process the input/output data used for model operations based on the DL Rx indicator transmitted to the UE 210 or received from the UE 230. The detailed pre-processing steps are explained later below with reference to FIG. 5.

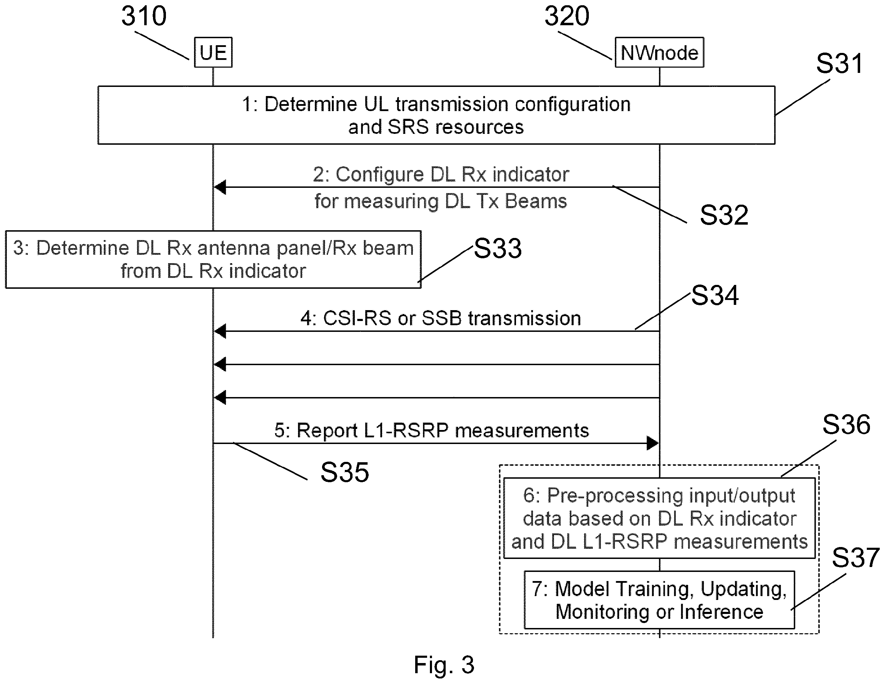

According to at least some examples of embodiments with reference to FIG. 3, the following is about enhancing the L1-RSRP measurements configuration to include an indicator about the DL Rx configuration. In this example, it is considered the UE to use the DL Rx indicator to configure the DL antenna panel and/or Rx beam for DL measurements based on SRS resources. By indicating to the UE a fixed Rx antenna panel and/or Rx beam, the DL Tx beam or Tx-Rx beam pairs measurements are performed in more "controlled" conditions from NW point of view. Thus, enabling to determine the quality of the DL measurements and other important factor impacting the quality (e.g. UE rotating, UE panel blockage) at NW side based on variation of the L1-RSRP over time. Therefore, it enables the NW to use or not use the reported measurements as input to the beam prediction model.

Referring now to FIG. 3, FIG. 3 shows a signaling diagram representing the enhanced L1-RSRP Measurements configuration to be used for NW-sided AI/ML based beam management model operations, according to various examples of embodiments of the subject disclosure.

According to various examples of embodiments, the procedure is represented in FIG. 3 and may be detailed as follows:
- In a first step, S31, the UL transmission configuration and SRS resources are determined based on the legacy operations performed by UE 310 and NWnode 320. After RRC configuration the UE 310 is configured through RRC with SRS Resource Sets and number of resources for each SRS Resource Sets depending on the UE 310 capability reported to NW (e.g. NW node 320, like e.g. a gNB).
- In a second step, S32, the NW (like e.g. the NW node 320) communicates to the UE 310 in the DL Rx indicator for measuring DL Tx beams or Tx-Rx beam pairs. The indicator may contain the SRS resources information, or the SRS resource set and the SRS resources related information, depending on the UE 310 capability.
- In a third step, S33, from the DL Rx indicator, the UE 310 determines at first the Tx antenna panel or Tx antenna panel and Tx beam corresponding to the SRS resources information. Then, the UE 310 determines the Rx antenna panel and/or Rx beam to be used for DL measurements. Note that, if there is DL-UL beam correspondence, the Rx antenna panel and Rx beam may be the same as the Tx antenna panel and Tx beam. Otherwise, the UE 310 may determine the Rx antenna panel and Rx beam corresponding to the Tx antenna panel and Tx beam based on previous measurements.
- In a fourth step, S34, the NW 320 transmits one or more CSI reference signals or SSB reference signals sweeping different Tx beams from one to another.
- In a fifth step, S35, the UE 310 performs the L1-RSRP measurements using the Rx antenna panel and Rx beam determined in step S33. Then, the UE 310 reports the measurements results.
- In a sixth step, S36, the NW 320 pre-processes the input/output data used for model operations including the DL Rx indicator transmitted to the UE 310. The detailed pre-processing steps are explained below with reference to FIG. 5.
- In a seventh step, S37, the NW 320 executes AI/ML-based BM model training/updating/monitoring or inference operations using as input/output pre-processed data.

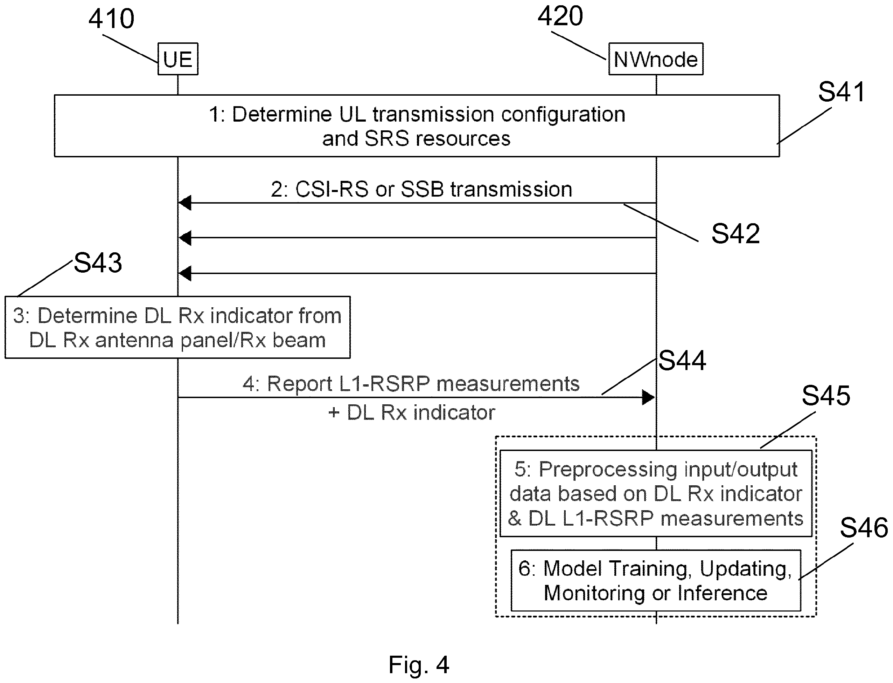

According to at least some examples of embodiments with reference to FIG. 4, the following is about enhancing the L1-RSRP measurements report to include the DL Rx indicator. Differently from current procedure in which an UE may report along with the SSBRI/CRI and L1-RSRP pair, the information about the maximum supported number of SRS antenna ports (clause 5.2.1.4.3 of 38.214), **in this other example, it is considered the UE to report the DL Rx indicator, identifying the UL SRS resource set and SRS resource corresponding to Rx antenna panel and Rx beam used during DL measurements.**

Referring now to FIG. 4, FIG. 4 shows a signaling diagram representing the enhanced L1-RSRP Measurements reporting to be used for AI/ML-based beam management model operations, according to various examples of embodiments of the subject disclosure.
According to various examples of embodiments, the procedure is represented in FIG. 4 and may be detailed as follows:
- A first step, S41, may be similar to the first step S31 outlined above with reference to FIG. 3.
- In a second step, S42, the NW (e.g. the NW node 420, like e.g. a gNB) transmits one or more CSI reference signals or SSB reference signals sweeping different Tx beams from one to another. At the same time, the UE 410 performs the L1-RSRP measurements using one or more Rx antenna panel(s) and Rx beam(s).
- In a third step, S43, from the DL Rx panel and Rx beam used during DL measurements, the UE 410 determines at first the Tx antenna panel and Tx beam for UL transmission. If DL-UL beam correspondence exists, the Rx antenna panel and Rx beam may be the same of the Tx antenna panel and Tx beam. Otherwise, the UE 410 may determine the Tx antenna panel and Tx beam corresponding to the Rx antenna panel and Rx beam based on previous measurements. Then, from the Tx antenna panel and Tx beam, the UE 410 determines the corresponding SRS resource set and SRS resource and includes these information in the DL Rx indicator.
- In a fourth step, S44, the UE 410 reports the measurements results (e.g. SSBRI/CRI and L1-RSRP of N-best beam) along with the DL Rx indicator.
- In a fifth step, S45, the NW 420 pre-processes the input/output data used for model operations based on the DL Rx indicator and L1-RSRP measurements received by the UE 410. The detailed pre-processing is outlined below with reference to FIG. 5.
- In a sixth step, S46, the NW 420 executes AI/ML-based BM model training/updating/monitoring or inference operations using for model input/output pre-processed data.

Referring now to FIG. 5, FIG. 5 shows a NW-side model usage of the DL Rx indicator according to various examples of embodiments of the subject disclosure.

According to at least some embodiments, in FIG. 5, the NW can utilize option 1 510: Enhanced L1-RSRP Measurements Reporting which comprise L1-RSRP+CRIs +DL Rx Indicator into pre-processing data and feed into Model training, functionality and/or model updating, and key performance indicators (KPIs) related to prediction performance monitoring. The NW can run only inference without performing ML training as well.

According to at least some embodiments, in FIG. 5, the NW can utilize option 2 520: Enhanced L1-RSRP Measurements configurations + L1-RSRP Measurement reporting into pre-processing data and feed into Model training, functionality or model updating, and KPIs related to prediction performance monitoring.

Upon reception of the measurements report including the DL Rx Indicator or based on the DL Rx Indicator transmitted to the UE, the NW node may use this indicator (i.e. DL Rx indicator) as follows:
For reporting related to the SetB measured DL Tx beams or Tx-Rx beam pairs:
   - The NW node may use the indicator as additional input of the model.
   - The NW node may use the indicator as an additional aspect for NW sided model data collection (as agreed in above RAN1#112bis-e agreement) for both model training and inference. The NW node may verify the model functionality/functionalities with respect to the corresponding L1-RSRP measurements including indicator. The model functionalities can be top-K beam prediction in spatial/time domain and/or Tx-Rx beam pairs.
   - The NW node may preprocess the RSRP measurement reporting to mask or remove from the model input the RSRP measurements related to the DL Tx beams or Tx-Rx beam pairs with indicator that has different value compared to the majority, or (e.g. DL Tx beams or Tx-Rx beam pairs with a DL Rx indicator having a different indicator value compared) to a given minimum number of DL Tx beams or Tx-Rx beam pairs.
   - The NW node may determine a stability metric of the reported measurements based on the distribution of indicators for different DL Tx beams or Tx-Rx beam pairs.
   - The NW node may decide to decrease the measurements and reporting periodicity based on such stability metric (A UE rotating may frequently change the panel for the different Tx beam; therefore, it is needed to decrease the measurements periodicity).
   - The NW node may change the configuration of SetB beams to increase or decrease the number of DL Tx beams or Tx-Rx beam pairs measurements based on such stability metric.
For indicator related to SetA beams, the NW node may use the indicator related for RSRP measurements like for the SetB measured beams. In addition:
   - The NW node may decide to discard the SetA beams measurements (which may be understood to represent predetermined beam measurements) with the purpose of overhead reduction to obtain the ground truth top-1 or top-K best DL Tx beams or Tx-Rx beam pairs based on stability metric described above.

In the following, further examples of embodiments are described in relation to the aforementioned methods and/or apparatuses.

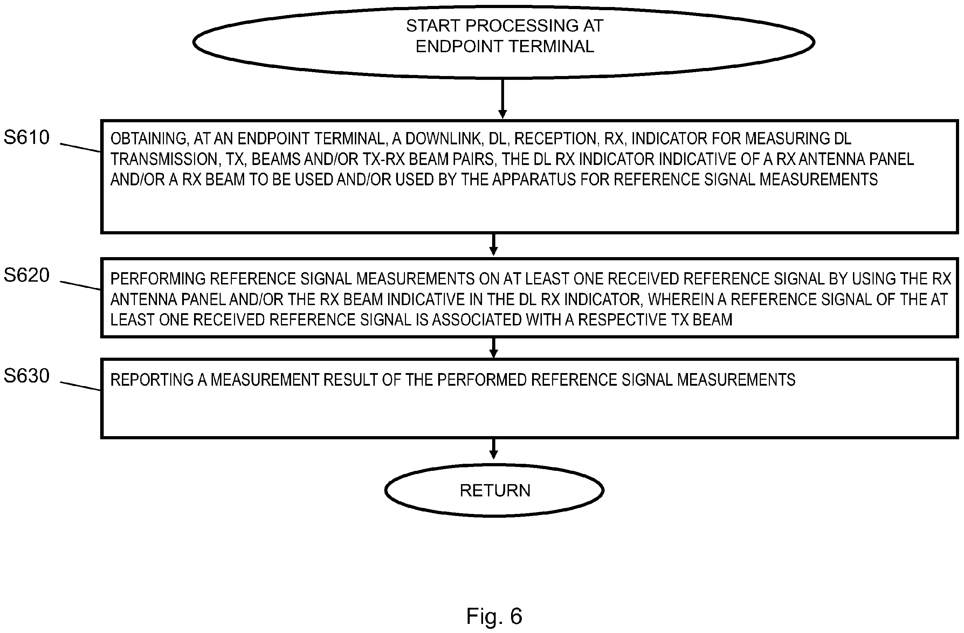

Referring now to FIG. 6, there is shown a flowchart illustrating steps corresponding to an example method according to various examples of embodiments of the subject disclosure. Such method steps may correspond to at least part of such configuration as outlined with reference to FIGs. 1 and 2 as well as to at least part of such steps as outlined above with reference to FIGs. 3 to 5.

In particular, according to FIG. 6, in S610, the method comprises obtaining, at an endpoint terminal, a downlink, DL, reception, Rx, indicator for measuring DL transmission, Tx, beams and/or Tx-Rx beam pairs, the DL Rx indicator indicative of a Rx antenna panel and/or a Rx beam to be used and/or used by the apparatus for reference signal measurements.

Further, in S620, the method comprises performing reference signal measurements on at least one received reference signal by using the Rx antenna panel and/or the Rx beam indicative in the DL Rx indicator, wherein a reference signal of the at least one received reference signal is associated with a respective Tx beam.

Further, in S630, the method comprises reporting a measurement result of the performed reference signal measurements.

According to various examples of embodiments, the method may further comprise determining, based on the obtained DL Rx indicator, a Rx antenna panel and/or a Rx beam to be used by the endpoint terminal for reference signal measurements, wherein the performing may further comprise to perform measurements on the at least one received reference signal by using the determined Rx antenna panel and/or the determined Rx beam.

Additionally and/or alternatively, according to various examples of embodiments, the method may further comprise obtaining the DL Rx indicator to comprises determining the DL Rx indicator, wherein the Rx antenna panel and/or the Rx beam indicative in the DL Rx indicator is a Rx antenna panel and/or a Rx beam of at least one Rx antenna panel and/or at least one Rx beam used by the endpoint terminal for the reference signal measurements. Further, the method may comprise that the performing comprises to perform the reference signal measurements by using the at least one Rx antenna panel and/or the at least one Rx beam. Moreover, the method may comprise that the reporting comprises the to report the determined DL Rx indicator.

It shall be noted that according to various examples of embodiments, whenever based on the obtained DL Rx indicator the endpoint terminal may face ambiguity to determine Rx antenna panel and/or a Rx beam to be used by the endpoint terminal for reference signal measurements, (for instance may be because the mapping between DL Rx indicator and Rx antenna panel and/or a Rx beam may not be one-to-one but it is one to many). In this case, the endpoint terminal may require to determine a DL Rx indicator indicative of a Rx antenna panel and/or a Rx beam used by the endpoint terminal for reference signal measurements.

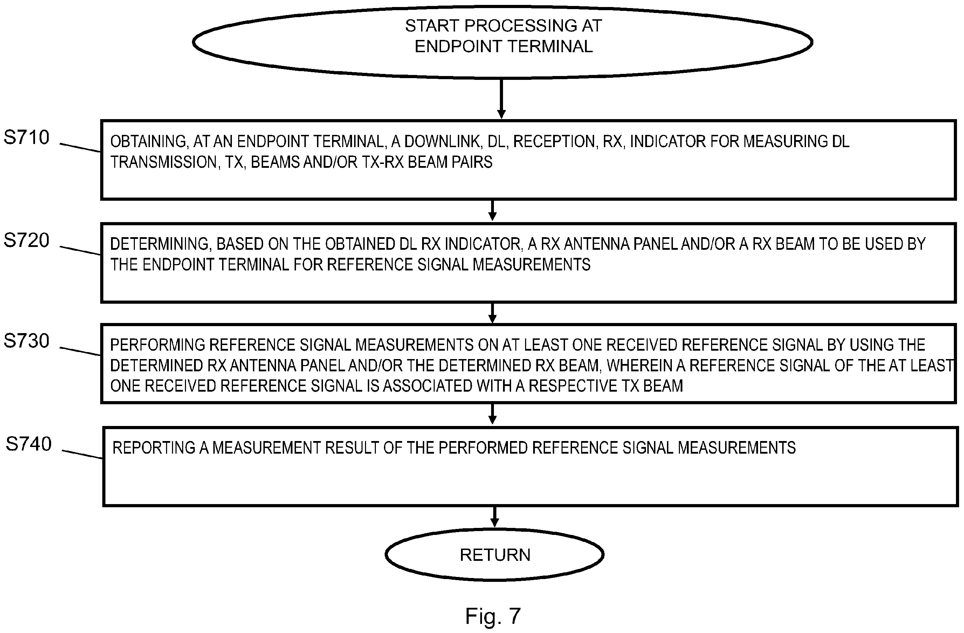

Referring now to FIG. 7, there is shown a flowchart illustrating steps corresponding to an example method according to various examples of embodiments of the subject disclosure. Such method steps may correspond to at least part of such configuration as outlined with reference to FIGs. 1 and 2 as well as to at least part of such steps as outlined above with reference to FIGs. 3 to 5.

In particular, according to FIG. 7, in S710, the method comprises obtaining, at an endpoint terminal, a downlink, DL, reception, Rx, indicator for measuring DL transmission, Tx,, beams and/or Tx-Rx beam pairs.

It shall be noted that according to various examples of embodiments, the following may be allocated to the endpoint terminal (as outlined/use above as well as further below): at least one reference signal, RS, resource set and at least one RS resource for each of the at least one RS resource set, wherein a RS resource set of the at least one RS resource set and/or a RS resource of the at least one RS resource is associated with a transmission, Tx, antenna panel and/or a Tx beam usable by and/or configured at the endpoint terminal. Or, according to at least some examples of embodiments, the following may be allocated to the endpoint terminal: at least one RS resource, wherein a RS resource of the at least one RS resource is associated with a Tx antenna panel and/or a Tx beam usable by and/or configured at the endpoint terminal.

Further, in S720, the method comprises determining, based on the obtained DL Rx indicator, a Rx antenna panel and/or a Rx beam to be used by the endpoint terminal for reference signal measurements.

Additionally, in S730, the method comprises performing reference signal measurements on at least one received reference signal by using the determined Rx antenna panel and/or the determined Rx beam, wherein a reference signal of the at least one received reference signal is associated with a respective Tx beam.

It shall be noted that (as outlined/use above as well as further below) each of the respective Tx beams may be a different Tx beam, i.e. each reference signal of the at least one received reference signal may be associated with a different Tx beam. Accordingly, it may be understood that the at least one received reference signal may be transmitted to the endpoint terminal from an access network element or function (e.g. a NW node), wherein such access network element or function may transmit the at least one received reference signal by sweeping different Tx beams.

Moreover, in S740, the method comprises reporting a measurement result of the performed reference signal measurements.

It is noted that according to various examples of embodiments of the subject disclosure, the aforementioned method steps S710 to S740 may be applied at an endpoint terminal, (e.g., UE 110, 210, 310) as outlined-above with reference to FIGs. 1 to 5. In addition, obtaining (reporting) e.g. the DL Rx indicator comprises receiving (transmitting) e.g. the DL Rx indicator, e.g. from (to) an access network element or function (e.g., NW node 220, 320) as outlined-above with reference to FIGs. 1 to 5.

Moreover, according to at least some examples of embodiments, the DL Rx indicator may comprise RS resource related information corresponding to a Tx antenna panel and/or a Tx beam. The Tx antenna panel and/or a Tx beam may be usable by the endpoint terminal.

Additionally, according to at least some examples of embodiments, the determining of the Rx antenna panel and/or the Rx beam may comprise determining, based on the DL Rx indicator, the Tx antenna panel and/or the Tx beam corresponding to the RS resource related information included in the DL Rx indicator, and determining the Rx antenna panel and/or the Rx beam in relation to the determined Tx antenna panel and/or the determined Tx beam.

Furthermore, according to various examples of embodiments, the obtaining of the DL Rx indicator may comprise determining (e.g. deriving) the DL Rx indicator based on a RS resource set and/or a RS resource associated with a latest UL transmission made by the endpoint terminal, and/or determining (e.g. deriving) the DL Rx indicator based on a transmission configuration indicator, TCI, state of latest DL channels associated with the endpoint terminal.

Moreover, according to at least some examples of embodiments, the method may further comprise receiving an instruction to determine (e.g. derive) the DL Rx indicator.

Furthermore, according to various examples of embodiments, the RS resource related information may comprise a RS resource set indicator for identifying at least one RS resource related (e.g. belonging) to the Tx antenna panel and corresponding to the Rx antenna panel, and/or at least one RS resource related to the Rx beam.

Moreover, according to at least some examples of embodiments, the DL Rx indicator may be separately configured for different types of reference signals, and/or the DL Rx indicator may be commonly configured for two or more types of reference signals.

Furthermore, according to various examples of embodiments, performing the reference signal measurements may comprise measuring a DL L1- reference signal received power, RSRP, of the at least one received reference signal.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

The aforementioned examples of embodiments thus, for instance, realize to avoid reporting inaccurate RSRP measurements, like L1-RSRP measurements, due to changes of the UE antenna panel and DL Rx beam used for DL Tx beam or DL Tx-Rx beam pair measurements. Further, it is, for instance, realized to avoid using inaccurate measurements on NW side for determining, for e.g. an AI/ML model, model input and ground-truth model output (e.g., beam RSPRs or Top-1 beam ID) during model training, update/fine-tuning and monitoring operations. Moreover, it is, for instance, realized to avoid using for NW side BM prediction model measurements performed at the UE without knowing the antenna panel and/or DL Rx beam used.

It shall be noted that Top-1 or Top-k (as used above as well as further below) may indicate the best or K-best Tx beam(s) or Tx-Rx beam pair(s) (e.g. the one(s) with highest RSRP) based on a ranking of all the Tx beams or Tx-Rx beam pairs (e.g. all the Tx beams or Tx-Rx beam pairs used and/or usable by an access network element or function for transmission of at least one reference signal).

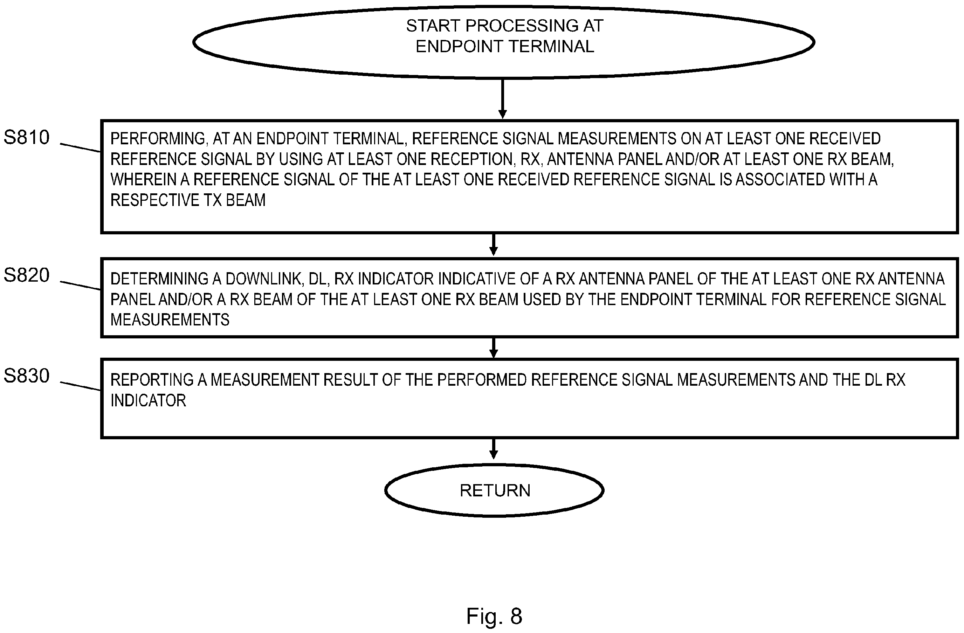

Referring now to FIG. 8, FIG. 8 shows a flowchart illustrating steps corresponding to an example method according to various examples of embodiments of the subject disclosure. Such method steps may correspond to at least part of such configuration as outlined with reference to FIGs. 1 and 2 as well as to at least part of such steps as outlined above with reference to FIGs. 3 to 5.

In particular, according to FIG. 8, in S810, the method comprises performing, at an endpoint terminal, reference signal measurements on at least one received reference signal by using at least one reception, Rx, antenna panel and/or at least one Rx beam, wherein a reference signal of the at least one received reference signal is associated with a respective Tx beam.

Further, in S820, the method comprises determining a downlink, DL, Rx indicator indicative of a Rx antenna panel of the at least one Rx antenna panel and/or a Rx beam of the at least one Rx beam used by the endpoint terminal for reference signal measurements.

Additionally, in S830, the method comprises reporting a measurement result of the performed reference signal measurements and the DL Rx indicator.

It is noted that according to various examples of embodiments of the subject disclosure, the aforementioned method steps S810 to S830 may be applied at an endpoint terminal, (e.g., UE 110, 230, 410) as outlined-above with reference to FIGs. 1 to 5. In addition, reporting e.g. the DL Rx indicator comprises transmitting e.g. the DL Rx indicator, e.g. to an access network element or function (e.g., NW node 230, 420) as outlined-above with reference to FIGs. 1 to 5.

Moreover, according to at least some examples of embodiments, the DL Rx indicator may comprise RS resource related information corresponding to a Tx antenna panel and/or a Tx beam. The Tx antenna panel and/or a Tx beam may be usable by the endpoint terminal.

Furthermore, according to various examples of embodiments, the determining of the DL Rx indicator may comprise determining (e.g. deriving) the DL Rx indicator based on a RS resource set and/or a RS resource associated with a latest UL transmission made by the endpoint terminal, and/or determining (e.g. deriving) the DL Rx indicator based on a transmission configuration indicator, TCI, state of latest DL channels associated with the endpoint terminal.

Moreover, according to at least some examples of embodiments, the method may further comprise receiving an instruction to determine (e.g. derive) the DL Rx indicator.

Furthermore, according to various examples of embodiments, the method may further comprise determining a Tx antenna panel and/or a Tx beam usable by the endpoint terminal and related to the at least one Rx antenna panel and/or the at least one Rx beam used during the reference signal measurements, wherein the determining of the DL Rx indicator may comprise determining the DL Rx indicator to comprise RS resource related information corresponding to the determined Tx antenna panel and/or the determined Tx beam.

Furthermore, according to various examples of embodiments, the RS resource related information may comprise a RS resource set indicator for identifying at least one RS resource related to the Tx antenna panel and corresponding to the Rx antenna panel, and/or at least one RS resource related to the Rx beam.

Moreover, according to at least some examples of embodiments, the DL Rx indicator may be separately configured for different types of reference signals, and/or the DL Rx indicator may be commonly configured for two or more types of reference signals.

Furthermore, according to various examples of embodiments, performing the reference signal measurements may comprise measuring a DL L1- reference signal received power, RSRP, of the at least one received reference signal.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

The aforementioned examples of embodiments thus, for instance, realize to avoid reporting inaccurate RSRP measurements, like L1-RSRP measurements, due to changes of the UE antenna panel and DL Rx beam used for DL Tx beam or DL Tx-Rx beam pair measurements. Further, it is, for instance, realized to avoid using inaccurate measurements on NW side for determining, for e.g. an AI/ML model, model input and ground-truth model output (e.g., beam RSPRs or Top-1 beam ID) during model training, update/fine-tuning and monitoring operations. Moreover, it is, for instance, realized to avoid using for NW side BM prediction model measurements performed at the UE without knowing the antenna panel and/or DL Rx beam used.

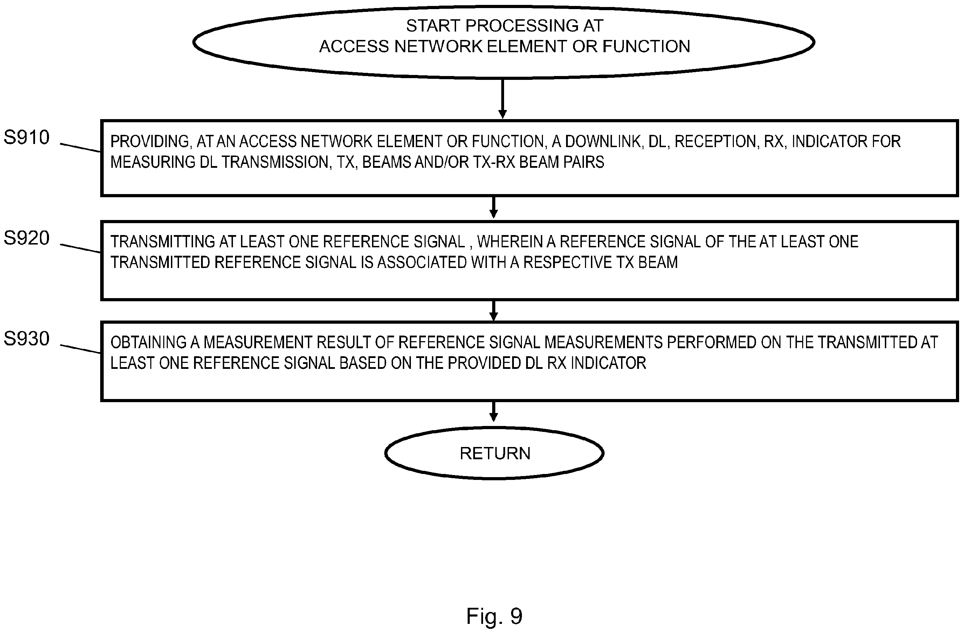

Referring now to FIG. 9, FIG. 9 shows a flowchart illustrating steps corresponding to an example method according to various examples of embodiments of the subject disclosure. Such method steps may correspond to at least part of such configuration as outlined with reference to FIGs. 1 and 2 as well as to at least part of such steps as outlined above with reference to FIGs. 3 to 5.

In particular, according to FIG. 9, in S910, the method comprises providing, at an access network element or function, a downlink, DL, reception, Rx, indicator for measuring DL transmission, Tx, beams and/or Tx-Rx beam pairs.

It shall be noted that the DL Rx indicator may be provided (e.g. transmitted) to an endpoint terminal.

Further, in S920, the method comprises transmitting at least one reference signal, wherein a reference signal of the at least one transmitted reference signal is associated with a respective Tx beam.

Additionally, in S930, the method comprises obtaining a measurement result of reference signal measurements performed on the transmitted at least one reference signal based on the provided DL Rx indicator.

It is noted that according to various examples of embodiments of the subject disclosure, the aforementioned method steps S910 to S930 may be applied at an access network element or function, (e.g., NW node 220, 320) as outlined-above with reference to FIGs. 1 to 5. In addition, providing (obtaining) e.g. the DL Rx indicator comprises transmitting (receiving) e.g. the DL Rx indicator, e.g. to (from) an endpoint terminal (e.g., UE 110, 210, 310) as outlined-above with reference to FIGs. 1 to 5.

Moreover, according to at least some examples of embodiments, the method may further comprise configuring the DL Rx indicator to comprise RS resource related information corresponding to a Tx antenna panel and/or a Tx beam usable by an endpoint terminal, wherein the providing may comprise providing the configured DL Rx indicator.

Furthermore, according to various examples of embodiments, transmitting the at least one reference signal may comprise transmitting a first type of reference signal representing at least one channel state information, CSI, reference signal, and/or a second type of reference signal representing at least one synchronization signal block, SSB, reference signal.

In addition, according to various examples of embodiments, the method may further comprise pre-processing, based on the provided DL Rx indicator and the obtained measurement result, input/output data to be used for an artificial intelligence/machine learning, AI/ML, -based beam management, BM, model; and executing operations of the AI/ML-based BM model using the pre-processed input/output data as input/output.

Moreover, according to at least some examples of embodiments, the pre-processing and/or executing may comprise at least one of
using the DL Rx indicator as additional input of the AI/ML-based BM model,
using the DL Rx indicator as an additional aspect for network sided model data collection for model training and inference,
verifying the AI/ML-based BM model's at least one functionality with respect to the provided DL Rx indicator and the obtained measurement result,
masking or removing from model input at least one reception power measurement related to
   DL Tx beams or Tx-Rx beam pairs with a DL Rx indicator having a different indicator value compared to a majority of indicator values of DL Rx indicators, and/or
   DL Tx beams or Tx-Rx beam pairs with a DL Rx indicator having a different indicator value compared to a given minimum number of DL Tx beams and/or Tx-Rx beam pairs,
determining a stability metric of obtained measurement results based on a distribution of DL Rx indicators for different DL Tx beams and/or Tx-Rx beam pairs,
deciding to decrease a measurement and reporting periodicity based on the determined stability metric,
changing a beam configuration to increase or decrease a number of DL Tx beams and/or Tx-Rx beam pairs measured based on the determined stability metric, or
discarding predetermined beam measurements to obtain ground truth top-1 or top-K best DL Tx beams and/or Tx-Rx beam pairs based on the determined stability metric and/or based on the DL Rx indicator.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

The aforementioned examples of embodiments thus, for instance, realize to avoid reporting inaccurate RSRP measurements, like L1-RSRP measurements, due to changes of the UE antenna panel and DL Rx beam used for DL Tx beam or DL Tx-Rx beam pair measurements. Further, it is, for instance, realized to avoid using inaccurate measurements on NW side for determining, for e.g. an AI/ML model, model input and ground-truth model output (e.g., beam RSPRs or Top-1 beam ID) during model training, update/fine-tuning and monitoring operations. Moreover, it is, for instance, realized to avoid using for NW side BM prediction model measurements performed at the UE without knowing the antenna panel and/or DL Rx beam used.

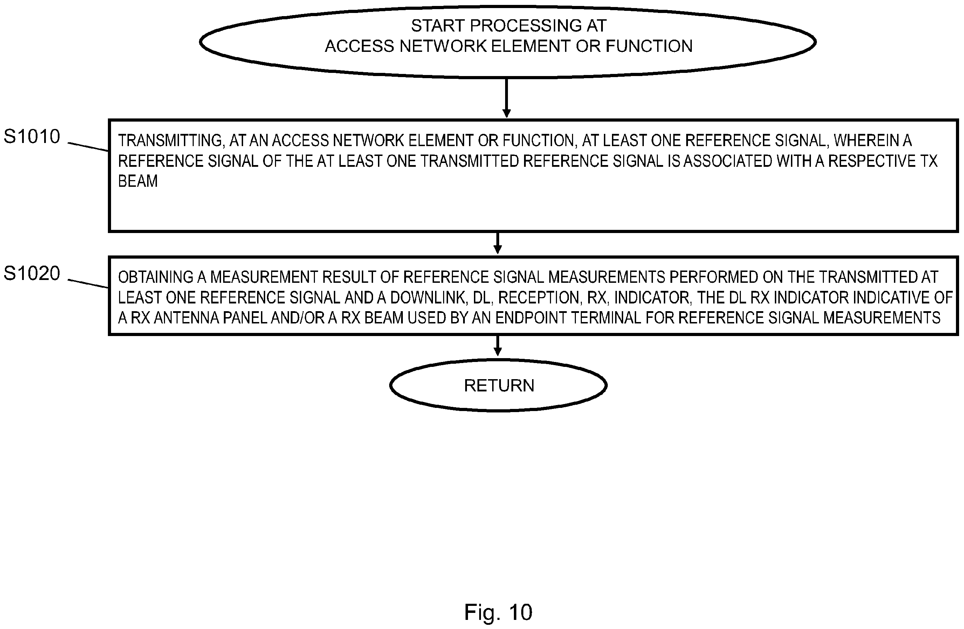

Referring now to FIG. 10, FIG. 10 shows a flowchart illustrating steps corresponding to an example method according to various examples of embodiments of the subject disclosure. Such method steps may correspond to at least part of such configuration as outlined with reference to FIGs. 1 and 2 as well as to at least part of such steps as outlined above with reference to FIGs. 3 to 5.

In particular, according to FIG. 10, in S1010, the method comprises transmitting, at an access network element or function, at least one reference signal, wherein a reference signal of the at least one transmitted reference signal is associated with a respective Tx beam.

It shall be noted that the at least one reference signal may be transmitted to an endpoint terminal.

Further, in S1020, the method comprises obtaining a measurement result of reference signal measurements performed on the transmitted at least one reference signal and obtaining a downlink, DL, reception, Rx, indicator, wherein the DL Rx indicator is indicative of a Rx antenna panel and/or a Rx beam used by an endpoint terminal for the reference signal measurements.

It is noted that according to various examples of embodiments of the subject disclosure, the aforementioned method steps S1010 and S1020 may be applied at an access network element or function, (e.g., NW node 240, 420) as outlined-above with reference to FIGs. 1 to 5. In addition, obtaining e.g. the DL Rx indicator comprises receiving e.g. the DL Rx indicator, e.g. from an endpoint terminal (e.g., UE 110, 230, 410) as outlined-above with reference to FIGs. 1 to 5.

In addition, according to various examples of embodiments, the method may further comprise transmitting an instruction to determine (e.g. derive) the DL Rx indicator.

Furthermore, according to various examples of embodiments, transmitting the at least one reference signal may comprise transmitting a first type of reference signal representing at least one channel state information, CSI, reference signal, and/or a second type of reference signal representing at least one synchronization signal block, SSB, reference signal.

In addition, according to various examples of embodiments, the method may further comprise pre-processing, based on the obtained DL Rx indicator and the obtained measurement result, input/output data to be used for an artificial intelligence/machine learning, AI/ML, -based beam management, BM, model; and executing operations of the AI/ML-based BM model using the pre-processed input/output data as input/output.

Moreover, according to at least some examples of embodiments, the pre-processing and/or executing may comprise at least one of
using the DL Rx indicator as additional input of the AI/ML-based BM model,
using the DL Rx indicator as an additional aspect for network sided model data collection for model training and inference,
verifying the AI/ML-based BM model's at least one functionality with respect to the obtained DL Rx indicator and the obtained measurement result,
masking or removing from model input at least one reception power measurement related to
   DL Tx beams or Tx-Rx beam pairs with a DL Rx indicator having a different indicator value compared to a majority of indicator values of DL Rx indicators, and/or
   DL Tx beams or Tx-Rx beam pairs with a DL Rx indicator having a different indicator value compared to a given minimum number of DL Tx beams and/or Tx-Rx beam pairs,
determining a stability metric of obtained measurement results based on a distribution of DL Rx indicators for different DL Tx beams and/or Tx-Rx beam pairs,
deciding to decrease a measurement and reporting periodicity based on the determined stability metric,
changing a beam configuration to increase or decrease a number of DL Tx beams and/or Tx-Rx beam pairs measured based on the determined stability metric, or
discarding predetermined beam measurements to obtain ground truth top-1 or top-K best DL Tx beams and/or Tx-Rx beam pairs based on the determined stability metric and/or based on the DL Rx indicator.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

Further, with further reference to FIG. 10, it shall be noted that according to various examples of embodiments, the transmitting step S1010 and the obtaining step S1020 may be adapted as follows, transmitting, in S1010, at least one reference signal, wherein a reference signal of the at least one transmitted reference signal is associated with a respective Tx beam; and, in S1020, obtaining a measurement result of reference signal measurements performed on the transmitted at least one reference signal.

Further, according to various examples of embodiments, the adapted method may further comprise configuring a downlink, DL, reception, Rx, indicator for measuring DL transmission, Tx, beams and/or Tx-Rx beam pairs, wherein the DL Rx indicator comprises reference signal, RS, resource related information corresponding to a Tx antenna panel and/or a Tx beam usable by an endpoint terminal; and providing the DL Rx indicator.

The aforementioned examples of embodiments thus, for instance, realize to avoid reporting inaccurate RSRP measurements, like L1-RSRP measurements, due to changes of the UE antenna panel and DL Rx beam used for DL Tx beam or DL Tx-Rx beam pair measurements. Further, it is, for instance, realized to avoid using inaccurate measurements on NW side for determining, for e.g. an AI/ML model, model input and ground-truth model output (e.g., beam RSPRs or Top-1 beam ID) during model training, update/fine-tuning and monitoring operations. Moreover, it is, for instance, realized to avoid using for NW side BM prediction model measurements performed at the UE without knowing the antenna panel and/or DL Rx beam used.

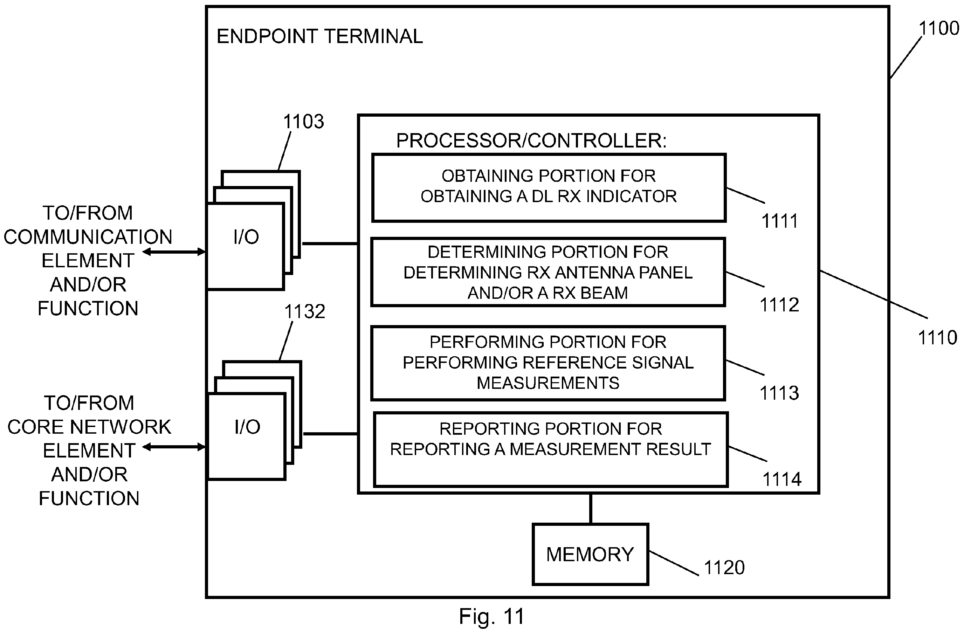

Referring now to FIG. 11, FIG. 11 shows a block diagram illustrating an example apparatus according to various examples of embodiments of the subject disclosure.

Specifically, FIG. 11 shows a block diagram illustrating an apparatus 1100, which may represent an endpoint terminal, (e.g. UE 110, 210, 310) as outlined above with reference to FIGs. 1 to 5, according to various examples of embodiments, which may participate in downlink measurements configuration and reporting with downlink reception indicator. Furthermore, even though reference is made to an endpoint terminal, the endpoint terminal may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1100 shown in FIG. 11 may include a processing circuitry, a processing function, a control unit or a processor 1110, such as a CPU or the like, which is suitable to enable downlink measurements configuration and reporting with downlink reception indicator. The processor 1110 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1131 and 1132 denote input/output (I/O) units or functions (interfaces) connected to the processor or processing function 1110. The I/O units 1131 and 1132 may be a combined unit including communication equipment towards several entities/elements, or may include a distributed structure with a plurality of different interfaces for different entities/elements. Reference sign 1120 denotes a memory usable, for example, for storing data and programs to be executed by the processor or processing function 1110 and/or as a working storage of the processor or processing function 1110. It is to be noted that the memory 1120 may be implemented by using one or more memory portions of the same or different type of memory, but may also represent an external memory, e.g. an external database provided on a cloud server.

The processor or processing function 1110 is configured to execute processing related to the above described processing. In particular, the processor or processing circuitry or function 1110 includes one or more of the following sub-portions. Sub-portion 1111 is an obtaining portion, which is usable as a portion for obtaining a DL Rx indicator. The portion 1111 may be configured to perform processing according to S610 of FIG. 6 and/or S710 of FIG. 7. Further, sub-portion 1112 is a determining portion, which is usable as a portion for determining a Rx antenna panel and/or a Rx beam. The portion 1112 may be configured to perform processing according to S720 of FIG. 7. Moreover, sub-portion 1113 is a performing portion, which is usable as a portion for performing reference signal measurements. The portion 1113 may be configured to perform processing according to S620 of FIG: 6 and/or S730 of FIG. 7. Furthermore, sub-portion 1114 is a reporting portion, which is usable as a portion for reporting a measurement result. The portion 1114 may be configured to perform processing according to S630 of FIG. 6 and/or S740 of FIG. 7.

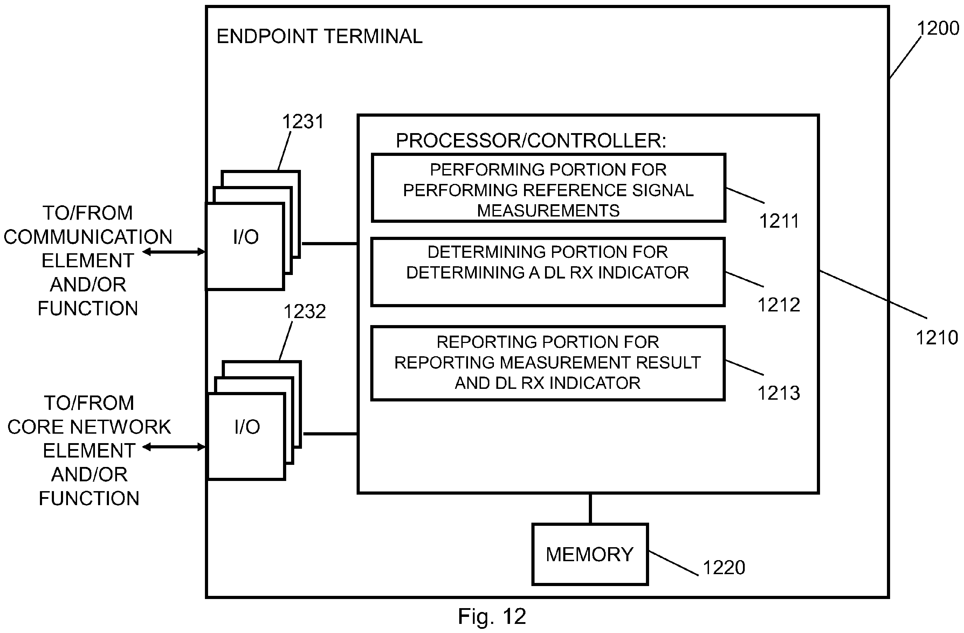

Referring now to FIG. 12, FIG. 12 shows a block diagram illustrating an example apparatus according to various examples of embodiments of the subject disclosure.

Specifically, FIG. 12 shows a block diagram illustrating an apparatus 1200, which may represent an endpoint terminal, (e.g. UE 110, 230, 410) as outlined above with reference to FIGs. 1 to 5, according to various examples of embodiments, which may participate in downlink measurements configuration and reporting with downlink reception indicator. Furthermore, even though reference is made to an endpoint terminal, the endpoint terminal may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1200 shown in FIG. 12 may include a processing circuitry, a processing function, a control unit or a processor 1210, such as a CPU or the like, which is suitable to enable downlink measurements configuration and reporting with downlink reception indicator. The processor 1210 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1231 and 1232 denote input/output (I/O) units or functions (interfaces) connected to the processor or processing function 1210. The I/O units 1231 and 1232 may be a combined unit including communication equipment towards several entities/elements, or may include a distributed structure with a plurality of different interfaces for different entities/elements. Reference sign 1220 denotes a memory usable, for example, for storing data and programs to be executed by the processor or processing function 1210 and/or as a working storage of the processor or processing function 1210. It is to be noted that the memory 1220 may be implemented by using one or more memory portions of the same or different type of memory, but may also represent an external memory, e.g. an external database provided on a cloud server.

The processor or processing function 1210 is configured to execute processing related to the above described processing. In particular, the processor or processing circuitry or function 1210 includes one or more of the following sub-portions. Sub-portion 1211 is a performing portion, which is usable as a portion for performing reference signal measurements. The portion 1211 may be configured to perform processing according to S810 of FIG. 8. Further, sub-portion 1212 is a determining portion, which is usable as a portion for determining a DL Rx indicator. The portion 1212 may be configured to perform processing according to S820 of FIG. 8. Furthermore, sub-portion 1213 is a reporting portion, which is usable as a portion for reporting a measurement result and the DL Rx indicator. The portion 1213 may be configured to perform processing according to S830 of FIG. 8.

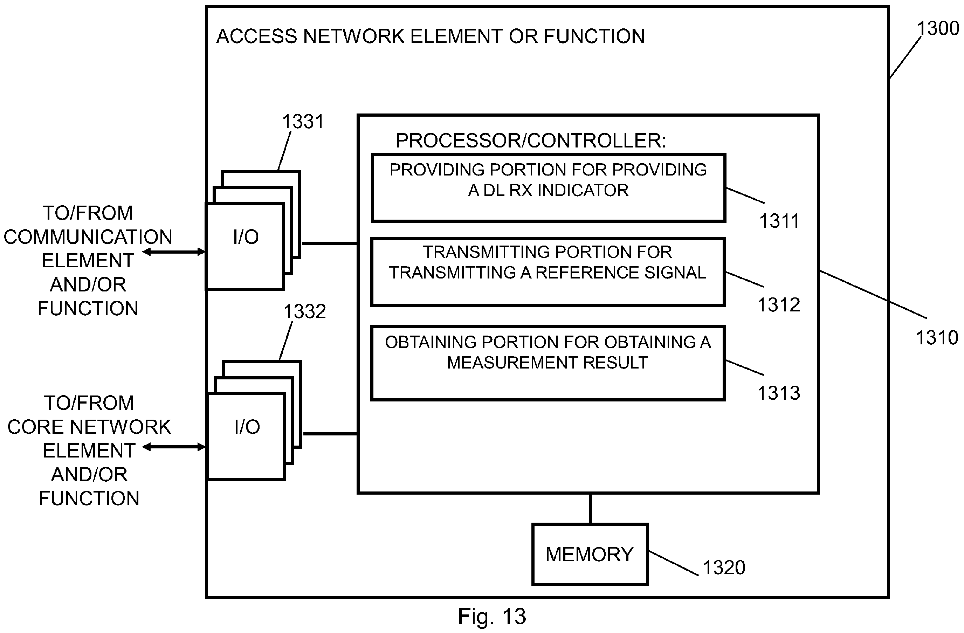

Referring now to FIG. 13, FIG. 13 shows a block diagram illustrating an example apparatus according to various examples of embodiments of the subject disclosure.

Specifically, FIG. 13 shows a block diagram illustrating an apparatus 1300, which may represent an access network element or function, (e.g. NW node 220, 320) as outlined above with reference to FIGs. 1 to 5, according to various examples of embodiments, which may participate in downlink measurements configuration and reporting with downlink reception indicator. Furthermore, even though reference is made to an access network element or function, the access network element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1300 shown in FIG. 13 may include a processing circuitry, a processing function, a control unit or a processor 1310, such as a CPU or the like, which is suitable to enable downlink measurements configuration and reporting with downlink reception indicator. The processor 1310 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1331 and 1332 denote input/output (I/O) units or functions (interfaces) connected to the processor or processing function 1310. The I/O units 1331 and 1332 may be a combined unit including communication equipment towards several entities/elements, or may include a distributed structure with a plurality of different interfaces for different entities/elements. Reference sign 1320 denotes a memory usable, for example, for storing data and programs to be executed by the processor or processing function 1310 and/or as a working storage of the processor or processing function 1310. It is to be noted that the memory 1320 may be implemented by using one or more memory portions of the same or different type of memory, but may also represent an external memory, e.g. an external database provided on a cloud server.

The processor or processing function 1310 is configured to execute processing related to the above described processing. In particular, the processor or processing circuitry or function 1310 includes one or more of the following sub-portions. Sub-portion 1311 is an providing portion, which is usable as a portion for providing a DL Rx indicator. The portion 1311 may be configured to perform processing according to S910 of FIG. 9. Further, sub-portion 1312 is a transmitting portion, which is usable as a portion for transmitting a reference signal. The portion 1312 may be configured to perform processing according to S920 of FIG. 9. Moreover, sub-portion 1313 is an obtaining portion, which is usable as a portion for obtaining a measurement result. The portion 1313 may be configured to perform processing according to S930 of FIG. 9.

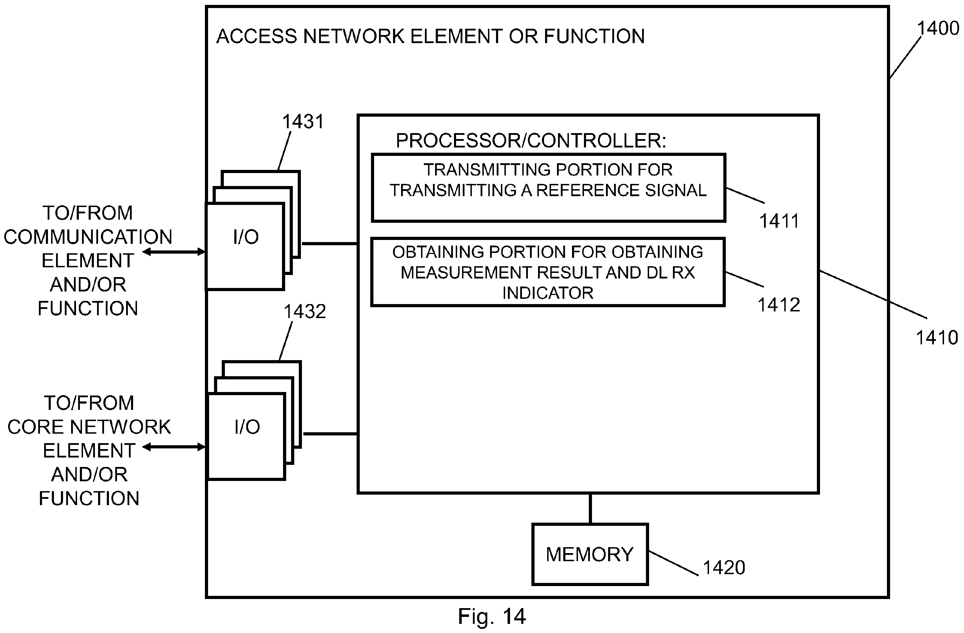

Referring now to FIG. 14, FIG. 14 shows a block diagram illustrating an example apparatus according to various examples of embodiments of the subject disclosure.

Specifically, FIG. 14 shows a block diagram illustrating an apparatus 1400, which may represent an access network element or function, (e.g. NW node 240, 410) as outlined above with reference to FIGs. 1 to 5, according to various examples of embodiments, which may participate in downlink measurements configuration and reporting with downlink reception indicator. Furthermore, even though reference is made to access network element or function, the access network element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1400 shown in FIG. 14 may include a processing circuitry, a processing function, a control unit or a processor 1410, such as a CPU or the like, which is suitable to enable downlink measurements configuration and reporting with downlink reception indicator. The processor 1410 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1431 and 1432 denote input/output (I/O) units or functions (interfaces) connected to the processor or processing function 1410. The I/O units 1431 and 1432 may be a combined unit including communication equipment towards several entities/elements, or may include a distributed structure with a plurality of different interfaces for different entities/elements. Reference sign 1420 denotes a memory usable, for example, for storing data and programs to be executed by the processor or processing function 1410 and/or as a working storage of the processor or processing function 1410. It is to be noted that the memory 1420 may be implemented by using one or more memory portions of the same or different type of memory, but may also represent an external memory, e.g. an external database provided on a cloud server.

The processor or processing function 1410 is configured to execute processing related to the above described processing. In particular, the processor or processing circuitry or function 1410 includes one or more of the following sub-portions. Sub-portion 1411 is a transmitting portion, which is usable as a portion for transmitting a reference signal. The portion 1411 may be configured to perform processing according to S1010 of FIG. 10. Further, sub-portion 1412 is an obtaining portion, which is usable as a portion for obtaining a measurement result and a DL Rx indicator. The portion 1412 may be configured to perform processing according to S1020 of FIG. 10.

It shall be noted that the apparatuses 1100 to 1400 as outlined above with reference to FIGs. 11 to 14 may comprise further/additional sub-portions, which may allow the apparatuses 1100 to 1400 to perform such methods/method steps as outlined above with reference to FIGs. 1 to 5.

Particularly, according to various examples of embodiments, the following apparatuses may be provided.

According to at least some examples of embodiments, there may be provided an apparatus (e.g. apparatus 1100 as outlined above with reference to FIG. 11), comprising
at least one processor; and
at least one memory storing instructions that, when executed by the at least one processor, cause the apparatus at least to:
   obtain a downlink, DL, reception, Rx, indicator for measuring DL transmission, Tx,, beams and/or Tx-Rx beam pairs;
   determine, based on the obtained DL Rx indicator, a Rx antenna panel and/or a Rx beam to be used by the apparatus for reference signal measurements;
   perform reference signal measurements on at least one received reference signal by using the determined Rx antenna panel and/or the determined Rx beam, wherein a reference signal of the at least one received reference signal is associated with a respective Tx beam; and
   report a measurement result of the performed reference signal measurements.

Moreover, according to at least some examples of embodiments, the DL Rx indicator may comprise RS resource related information corresponding to a Tx antenna panel and/or a Tx beam usable by the apparatus.

Additionally, according to at least some examples of embodiments, the apparatus caused to determine the Rx antenna panel and/or the Rx beam may comprise the apparatus caused to determine, based on the DL Rx indicator, the Tx antenna panel and/or the Tx beam corresponding to the RS resource related information included in the DL Rx indicator, and determine the Rx antenna panel and/or the Rx beam in relation to the determined Tx antenna panel and/or the determined Tx beam.

Furthermore, according to various examples of embodiments, the apparatus caused to obtain the DL Rx indicator may comprise the apparatus caused to determine (e.g. derive) the DL Rx indicator based on a RS resource set and/or a RS resource associated with a latest UL transmission made by the apparatus, and/or determine (e.g. derive) the DL Rx indicator based on a transmission configuration indicator, TCI, state of latest DL channels associated with the apparatus.

Moreover, according to at least some examples of embodiments, the apparatus may further be caused to receive an instruction to determine (e.g. derive) the DL Rx indicator.

Furthermore, according to various examples of embodiments, the RS resource related information may comprise a RS resource set indicator for identifying at least one RS resource related to the Tx antenna panel and corresponding to the Rx antenna panel, and/or at least one RS resource related to the Rx beam.

Moreover, according to at least some examples of embodiments, the DL Rx indicator may be separately configured for different types of reference signals, and/or the DL Rx indicator may be commonly configured for two or more types of reference signals.

Furthermore, according to various examples of embodiments, the apparatus caused to perform the reference signal measurements may comprise the apparatus caused to measure a DL L1- reference signal received power, RSRP, of the at least one received reference signal.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

According to at least some examples of embodiments, there may be provided an apparatus (e.g. apparatus 1200 as outlined above with reference to FIG. 12), comprising
at least one processor; and
at least one memory storing instructions that, when executed by the at least one processor, cause the apparatus at least to:
   perform reference signal measurements on at least one received reference signal by using at least one reception, Rx, antenna panel and/or at least one Rx beam, wherein a reference signal of the at least one received reference signal is associated with a respective Tx beam;
   determine a downlink, DL, Rx indicator indicative of a Rx antenna panel of the at least one Rx antenna panel and/or a Rx beam of the at least one Rx beam used by the apparatus for reference signal measurements; and
   report a measurement result of the performed reference signal measurements and the DL Rx indicator.

Moreover, according to at least some examples of embodiments, the DL Rx indicator may comprise RS resource related information corresponding to a Tx antenna panel and/or a Tx beam usable by the apparatus.

Furthermore, according to various examples of embodiments, the apparatus caused to determine the DL Rx indicator may comprise the apparatus caused to determine (e.g. derive) the DL Rx indicator based on a RS resource set and/or a RS resource associated with a latest UL transmission made by the apparatus, and/or determine (e.g. derive) the DL Rx indicator based on a transmission configuration indicator, TCI, state of latest DL channels associated with the apparatus.

Moreover, according to at least some examples of embodiments, the apparatus may further be caused to receive an instruction to determine (e.g. derive) the DL Rx indicator.

Furthermore, according to various examples of embodiments, the apparatus may further be caused to determine a Tx antenna panel and/or a Tx beam usable by the apparatus and related to the at least one Rx antenna panel and/or the at least one Rx beam used during the reference signal measurements, wherein the apparatus caused to determine the DL Rx indicator may comprise the apparatus caused to determine the DL Rx indicator to comprise RS resource related information corresponding to the determined Tx antenna panel and/or the determined Tx beam.

Furthermore, according to various examples of embodiments, the RS resource related information may comprise a RS resource set indicator for identifying at least one RS resource related to the Tx antenna panel and corresponding to the Rx antenna panel, and/or at least one RS resource related to the Rx beam.

Moreover, according to at least some examples of embodiments, the DL Rx indicator may be separately configured for different types of reference signals, and/or the DL Rx indicator may be commonly configured for two or more types of reference signals.

Furthermore, according to various examples of embodiments, the apparatus caused to perform the reference signal measurements may comprise the apparatus caused to measure a DL L1- reference signal received power, RSRP, of the at least one received reference signal.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

According to at least some examples of embodiments, there may be provided an apparatus (e.g. apparatus 1300 as outlined above with reference to FIG. 13), comprising
at least one processor; and
at least one memory storing instructions that, when executed by the at least one processor, cause the apparatus at least to:
   provide a downlink, DL, reception, Rx, indicator for measuring DL transmission, Tx,, beams and/or Tx-Rx beam pairs;
   transmit at least one reference signal, wherein a reference signal of the at least one transmitted reference signal is associated with a respective Tx beam; and
   obtain a measurement result of reference signal measurements performed on the transmitted at least one reference signal based on the provided DL Rx indicator.

Moreover, according to at least some examples of embodiments, the apparatus may further be caused to configure the DL Rx indicator to comprise RS resource related information corresponding to a Tx antenna panel and/or a Tx beam usable by an endpoint terminal, wherein the apparatus caused to provide the DL Rx indicator may comprise the apparatus caused to provide the configured DL Rx indicator.

Furthermore, according to various examples of embodiments, the apparatus caused to transmit the at least one reference signal may comprise the apparatus caused to transmit a first type of reference signal representing at least one channel state information, CSI, reference signal, and/or a second type of reference signal representing at least one synchronization signal block, SSB, reference signal.

In addition, according to various examples of embodiments, the apparatus may further be caused to pre-process, based on the provided DL Rx indicator and the obtained measurement result, input/output data to be used for an artificial intelligence/machine learning, AI/ML, -based beam management, BM, model; and execute operations of the AI/ML-based BM model using the pre-processed input/output data as input/output.

Moreover, according to at least some examples of embodiments, the apparatus caused to pre-process and/or execute may comprise the apparatus caused to at least one of
use the DL Rx indicator as additional input of the AI/ML-based BM model,
use the DL Rx indicator as an additional aspect for network sided model data collection for model training and inference,
verify the AI/ML-based BM model's at least one functionality with respect to the provided DL Rx indicator and the obtained measurement result,
mask or removing from model input at least one reception power measurement related to
   DL Tx beams or Tx-Rx beam pairs with a DL Rx indicator having a different indicator value compared to a majority of indicator values of DL Rx indicators, and/or
   DL Tx beams or Tx-Rx beam pairs with a DL Rx indicator having a different indicator value compared to a given minimum number of DL Tx beams and/or Tx-Rx beam pairs,
determine a stability metric of obtained measurement results based on a distribution of DL Rx indicators for different DL Tx beams and/or Tx-Rx beam pairs,
decide to decrease a measurement and reporting periodicity based on the determined stability metric,
change a beam configuration to increase or decrease a number of DL Tx beams and/or Tx-Rx beam pairs measured based on the determined stability metric, or
discard predetermined beam measurements to obtain ground truth top-1 or top-K best DL Tx beams and/or Tx-Rx beam pairs based on the determined stability metric and/or based on the DL Rx indicator.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

According to at least some examples of embodiments, there may be provided an apparatus (e.g. apparatus 1400 as outlined above with reference to FIG. 14), comprising
at least one processor; and
at least one memory storing instructions that, when executed by the at least one processor, cause the apparatus at least to:
   transmit at least one reference signal, wherein a reference signal of the at least one transmitted reference signal is associated with a respective Tx beam; and
   obtain a measurement result of reference signal measurements performed on the transmitted at least one reference signal and obtain a downlink, DL, reception, Rx, indicator,, wherein the DL Rx indicator is indicative of a Rx antenna panel and/or a Rx beam used by an endpoint terminal for the reference signal measurements.

In addition, according to various examples of embodiments, the apparatus may further be caused to transmit an instruction to determine (e.g. derive) the DL Rx indicator.

Furthermore, according to various examples of embodiments, the apparatus caused to transmit the at least one reference signal may comprise the apparatus caused to transmit a first type of reference signal representing at least one channel state information, CSI, reference signal, and/or a second type of reference signal representing at least one synchronization signal block, SSB, reference signal.

In addition, according to various examples of embodiments, the apparatus may further be caused to pre-process, based on the obtained DL Rx indicator and the obtained measurement result, input/output data to be used for an artificial intelligence/machine learning, AI/ML, -based beam management, BM, model; and execute operations of the AI/ML-based BM model using the pre-processed input/output data as input/output.

Moreover, according to at least some examples of embodiments, the apparatus caused to pre-process and/or execute may comprise the apparatus caused to at least one of
use the DL Rx indicator as additional input of the AI/ML-based BM model,
use the DL Rx indicator as an additional aspect for network sided model data collection for model training and inference,
verify the AI/ML-based BM model's at least one functionality with respect to the obtained DL Rx indicator and the obtained measurement result,
mask or removing from model input at least one reception power measurement related to
   DL Tx beams or Tx-Rx beam pairs with a DL Rx indicator having a different indicator value compared to a majority of indicator values of DL Rx indicators, and/or
   DL Tx beams or Tx-Rx beam pairs with a DL Rx indicator having a different indicator value compared to a given minimum number of DL Tx beams and/or Tx-Rx beam pairs,
determine a stability metric of obtained measurement results based on a distribution of DL Rx indicators for different DL Tx beams and/or Tx-Rx beam pairs,
decide to decrease a measurement and reporting periodicity based on the determined stability metric,
change a beam configuration to increase or decrease a number of DL Tx beams and/or Tx-Rx beam pairs measured based on the determined stability metric, or
discard predetermined beam measurements to obtain ground truth top-1 or top-K best DL Tx beams and/or Tx-Rx beam pairs based on the determined stability metric and/or based on the DL Rx indicator.

Moreover, according to at least some examples of embodiments, the RS resource set may be a sounding reference signal, SRS, resource set, and/or the RS resource may be a SRS resource, and/or the RS resource related information may be SRS resource related information, and/or the RS resource set indicator may be a SRS resource set indicator.

Moreover, according to at least some examples of embodiments, a computer program product for a computer may be provided, including software code portions for performing at least part of the above-outlined method steps, when said product is run on the computer.

Additionally, according to at least some examples of embodiments, wherein the computer program product may include a computer-readable medium on which said software code portions are stored, and/or the computer program product may be directly loadable into the internal memory of the computer and/or transmittable via a network by means of at least one of upload, download and push procedures.

Moreover, according to at least some examples of embodiments, there may be provided an apparatus, comprising
means for obtaining a downlink, DL, reception, Rx, indicator for measuring DL transmission, Tx, beams and/or Tx-Rx beam pairs, the DL Rx indicator indicative of a Rx antenna panel and/or a Rx beam to be used and/or used by the apparatus for reference signal measurements;
means for performing reference signal measurements on at least one received reference signal by using the Rx antenna panel and/or the Rx beam indicative in the DL Rx indicator, wherein a reference signal of the at least one received reference signal is associated with a respective Tx beam; and
means for reporting a measurement result of the performed reference signal measurements.

Moreover, according to at least some examples of embodiments, the apparatus may further comprise
means for determining, based on the obtained DL Rx indicator, a Rx antenna panel and/or a Rx beam to be used by the apparatus for reference signal measurements, and
means for performing the reference signal measurements on the at least one received reference signal by using the determined Rx antenna panel and/or the determined Rx beam,
or wherein the apparatus may further comprise
means for determining the DL Rx indicator, wherein the Rx antenna panel and/or the Rx beam indicative in the DL Rx indicator is a Rx antenna panel and/or a Rx beam of at least one Rx antenna panel and/or at least one Rx beam used by the apparatus for the reference signal measurements,
means for performing the reference signal measurements by using the at least one Rx antenna panel and/or the at least one Rx beam, and
means for reporting the determined DL Rx indicator.

Moreover, according to at least some examples of embodiments, the DL Rx indicator may comprise reference signal, RS, resource related information corresponding to a Tx antenna panel and/or a Tx beam usable by the apparatus.

Moreover, according to at least some examples of embodiments, the apparatus may further comprise,
means for determining, based on the DL Rx indicator, the Tx antenna panel and/or the Tx beam corresponding to the RS resource related information included in the DL Rx indicator, and
means for determining the Rx antenna panel and/or the Rx beam in relation to the determined Tx antenna panel and/or the determined Tx beam.

Moreover, according to at least some examples of embodiments, the apparatus may further comprise
means for determining the DL Rx indicator based on a RS resource set and/or a RS resource associated with a latest UL transmission made by the apparatus, and/or
means for determining the DL Rx indicator based on a transmission configuration indicator, TCI, state of latest DL channels associated with the apparatus,
wherein the apparatus may further comprise means for reporting the determined DL Rx indicator.

Moreover, according to at least some examples of embodiments, the apparatus may further comprise means for receiving an instruction to determine the DL Rx indicator.

Moreover, according to at least some examples of embodiments, the apparatus may further comprise
means for determining a Tx antenna panel and/or a Tx beam usable by the apparatus and related to the at least one Rx antenna panel and/or the at least one Rx beam used during the reference signal measurements, and
means for determining the DL Rx indicator to comprise RS resource related information corresponding to the determined Tx antenna panel and/or the determined Tx beam.

Moreover, according to at least some examples of embodiments, the RS resource related information may comprise
a RS resource set indicator for identifying at least one RS resource related to the Tx antenna panel and corresponding to the Rx antenna panel, and/or
at least one RS resource related to the Rx beam.

Moreover, according to at least some examples of embodiments, the DL Rx indicator may be separately configured for different types of reference signals, and/or the DL Rx indicator may be commonly configured for two or more types of reference signals.

Moreover, according to at least some examples of embodiments, the apparatus may further comprise means for measuring a DL L1- reference signal received power, RSRP, of the at least one received reference signal.

According to various examples of embodiments, the apparatus may comprise means for enabling the apparatus to perform steps as outlined above with reference to FIGs. 3 to 5 and 6 to 8.

Moreover, according to at least some examples of embodiments, there may be provided an apparatus, comprising
means for transmitting at least one reference signal, wherein a reference signal of the at least one transmitted reference signal is associated with a respective Tx beam; and
means for obtaining a measurement result of reference signal measurements performed on the transmitted at least one reference signal.

Furthermore, according to various examples of embodiments, the apparatus may further comprise
means for configuring a downlink, DL, reception, Rx, indicator for measuring DL transmission, Tx, beams and/or Tx-Rx beam pairs, wherein the DL Rx indicator comprises reference signal, RS, resource related information corresponding to a Tx antenna panel and/or a Tx beam usable by an endpoint terminal; and
means for providing the DL Rx indicator.

Furthermore, according to various examples of embodiments, the apparatus may further comprise means for transmitting an instruction to determine the DL Rx indicator.

Furthermore, according to various examples of embodiments, the apparatus may further comprise
means for obtaining a DL Rx indicator; and/or
means for obtaining the measurement result based on the provided and/or obtained DL Rx indicator.

Furthermore, according to various examples of embodiments, the apparatus may further comprise means for transmitting
a first type of reference signal representing at least one channel state information, CSI, reference signal, and/or
a second type of reference signal representing at least one synchronization signal block, SSB, reference signal.

Furthermore, according to various examples of embodiments, the apparatus may further comprise
means for pre-processing, based on the DL Rx indicator and the obtained measurement result, input/output data to be used for an artificial intelligence/machine learning, AI/ML, -based beam management, BM, model; and
means for executing operations of the AI/ML-based BM model using the pre-processed input/output data as input/output.

Furthermore, according to various examples of embodiments, the apparatus may further comprise means for pre-processing and/or means for executing at least one of:
to use the DL Rx indicator as additional input of the AI/ML-based BM model,
to use the DL Rx indicator as an additional aspect for network sided model data collection for model training and inference,
to verify the AI/ML-based BM model's at least one functionality with respect to the DL Rx indicator and the obtained measurement result,
to mask or to remove from model input at least one reception power measurement related to
   DL Tx beams or Tx-Rx beam pairs with a DL Rx indicator having a different indicator value compared to a majority of indicator values of DL Rx indicators, and/or
   DL Tx beams or Tx-Rx beam pairs with a DL Rx indicator having a different indicator value compared to a given minimum number of DL Tx beams and/or Tx-Rx beam pairs,
to determine a stability metric of obtained measurement results based on a distribution of DL Rx indicators for different DL Tx beams and/or Tx-Rx beam pairs,
to decide to decrease a measurement and reporting periodicity based on the determined stability metric,
to change a beam configuration to increase or decrease a number of DL Tx beams and/or Tx-Rx beam pairs measured based on the determined stability metric, or
to discard predetermined beam measurements to obtain ground truth top-1 or top-K best DL Tx beams and/or Tx-Rx beam pairs based on the determined stability metric and/or based on the DL Rx indicator.

According to various examples of embodiments, the apparatus may comprise means for enabling the apparatus to perform steps as outlined above with reference to FIGs. 3 to 5, 9 and 10.
It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, 6G, Bluetooth, Infrared, and the like may be used; additionally, examples of embodiments may also apply wired technologies, e.g. IP based access technologies like cable networks or fixed lines.
- examples of embodiments suitable to be implemented as software code or portions thereof and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of examples of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- examples of embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- examples of embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- examples of embodiments may also be implemented as computer program products, including a computer usable medium having a computer readable program code embodied therein, the computer readable program code adapted to execute a process as described in embodiments, wherein the computer usable medium may be a non-transitory medium.

The term "circuitry" may refer to one or more or all of the following examples of embodiments:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (e.g., tangible, not a signal ) as opposed to a limitation on data storage persistency (e.g., RAM vs. ROM).

As used herein, "at least one of the following " and "at least one of " and similar wording, where the list of two or more elements are joined by "and" or "or", mean at least any one of the elements, or at least any two or more of the elements, or at least all the elements.

Although the subject disclosure has been described herein before with reference to various examples of embodiments thereof, the subject disclosure is not limited thereto and it will be apparent to a person skilled in the art that various modifications can be made to the subject disclosure.

The following meanings for the abbreviations used herein apply:
- 3GPP: 3^{rd} Generation Partnership Project
- 3GGP2: 3^{rd} Generation Partnership Project 2
- 4G: Fourth Generation
- 5G: Fifth Generation
- 6G: Sixth Generation
- AI: Artificial Intelligence
- AP: Access Point
- API: Application Programming Interface
- BM: Beam Management
- BS: Base Station
- CDMA: Code Division Multiple Access
- CNN: Convolutional Neural Network
- CSI: Channel State Information
- DCI: Downlink Control Information
- DL: Downlink
- eNB: Evolved Node B
- ETSI: European Telecommunications Standards Institute
- gNB: Next Generation Node B
- IEEE: Institute of Electrical and Electronics Engineers
- ITU: International Telecommunication Union
- KPI: Key Performance Indicator
- LTE: Long Term Evolution
- LTE-A: Long Term Evolution-Advanced
- MAC CE: Medium Access Control Control Element
- MANETs: Mobile Ad-Hoc Networks
- MIMO: Multiple-Input and Multiple-Output
- ML: Machine Learning
- NB: Node B
- NN: Neural Network
- NR: New Radio
- RAM: Random Access Memory
- RAN: Radio Access Network
- RB: Residual Block
- ROM: Read Only Memory
- RS: Reference Signal
- RSRP: Reference Signal Received Power
- Rx: Receiver
- SSB: Synchronization Signal Block
- TISPAN: Telecoms & Internet converged Services & Protocols for Advanced Networks
- TRP: Transmission Point
- Tx: Transmitter
- UDR: Unified Data Repository
- UE: User Equipment
- UL: Uplink
- UWB: Ultra-Wideband
- WCDMA: Wideband Code Division Multiple Access
- WiMAX: Worldwide Interoperability for Microwave Access
- WLAN: Wireless Local Area Network

## Claims

1. An apparatus, comprising,
means for obtaining a downlink, DL, reception, Rx, indicator for measuring DL transmission, Tx, beams and/or Tx-Rx beam pairs, the DL Rx indicator indicative of a Rx antenna panel and/or a Rx beam to be used and/or used by the apparatus for reference signal measurements;
means for performing reference signal measurements on at least one received reference signal by using the Rx antenna panel and/or the Rx beam indicative in the DL Rx indicator, wherein a reference signal of the at least one received reference signal is associated with a respective Tx beam; and
means for reporting a measurement result of the performed reference signal measurements.

2. The apparatus according to claim 1, further comprising
means for determining, based on the obtained DL Rx indicator, a Rx antenna panel and/or a Rx beam to be used by the apparatus for reference signal measurements, wherein
the means for performing the reference signal measurements further comprises means for performing the reference signal measurements on the at least one received reference signal by using the determined Rx antenna panel and/or the determined Rx beam;
or wherein the means for obtaining the DL Rx indicator comprises means for determining the DL Rx indicator, wherein the Rx antenna panel and/or the Rx beam indicative in the DL Rx indicator is a Rx antenna panel and/or a Rx beam of at least one Rx antenna panel and/or at least one Rx beam used by the apparatus for the reference signal measurements,
the means for performing the reference signal measurements comprises means for performing the reference signal measurements by using the at least one Rx antenna panel and/or the at least one Rx beam, and
the means for reporting the measurement result comprises means for reporting the determined DL Rx indicator.

3. The apparatus according to claim 2, wherein the means for determining the Rx antenna panel and/or the Rx beam comprises
means for determining, based on the DL Rx indicator, the Tx antenna panel and/or the Tx beam corresponding to the RS resource related information included in the DL Rx indicator, and
means for determining the Rx antenna panel and/or the Rx beam in relation to the determined Tx antenna panel and/or the determined Tx beam.

4. The apparatus according to any of claims 2, wherein the means for obtaining the DL Rx indicator comprises
means for determining the DL Rx indicator based on a RS resource set and/or a RS resource associated with a latest UL transmission made by the apparatus, and/or
means for determining the DL Rx indicator based on a transmission configuration indicator, TCI, state of latest DL channels associated with the apparatus,
wherein the means for reporting the measurement result comprises means for reporting the determined DL Rx indicator.

5. The apparatus according to any of claims 2 to 4, further comprising
means for determining a Tx antenna panel and/or a Tx beam usable by the apparatus and related to the at least one Rx antenna panel and/or the at least one Rx beam used during the reference signal measurements,
wherein the means for determining the DL Rx indicator comprises
means for determining the DL Rx indicator to comprise RS resource related information corresponding to the determined Tx antenna panel and/or the determined Tx beam.

6. The apparatus according to any of claims 1 to 5, wherein the RS resource related information comprises
a RS resource set indicator for identifying at least one RS resource related to the Tx antenna panel and corresponding to the Rx antenna panel, and/or
at least one RS resource related to the Rx beam.

7. The apparatus according to any of claims 1 to 6, wherein
the DL Rx indicator is separately configured for different types of reference signals, and/or
the DL Rx indicator is commonly configured for two or more types of reference signals.

8. The apparatus according to any of claims 1 to 7, wherein the means for performing the reference signal measurements comprises means for measuring a DL L1- reference signal received power, RSRP, of the at least one received reference signal.

9. An apparatus, comprising,
means for transmitting at least one reference signal, wherein a reference signal of the at least one transmitted reference signal is associated with a respective Tx beam; and
means for obtaining a measurement result of reference signal measurements performed on the transmitted at least one reference signal.

10. The apparatus according to claim 9, further comprising
means for configuring a downlink, DL, reception, Rx, indicator for measuring DL transmission, Tx, beams and/or Tx-Rx beam pairs, wherein the DL Rx indicator comprises reference signal, RS, resource related information corresponding to a Tx antenna panel and/or a Tx beam usable by an endpoint terminal; and
means for providing the DL Rx indicator.

11. The apparatus according to claim 9 or 10, further comprising means for transmitting an instruction to determine the DL Rx indicator.

12. The apparatus according to any of claims 9 to 11, wherein
the means for obtaining the measurement result comprises means for obtaining a DL Rx indicator; and/or
the means for obtaining the measurement result comprises means for obtaining the measurement result based on the provided and/or obtained DL Rx indicator.

13. The apparatus according to any of claims 9 to 12, wherein the means for transmitting the at least one reference signal comprises means for transmitting
a first type of reference signal representing at least one channel state information, CSI, reference signal, and/or
a second type of reference signal representing at least one synchronization signal block, SSB, reference signal.

14. The apparatus according to any of claims 9 to 13, further comprising
means for pre-processing, based on the DL Rx indicator and the obtained measurement result, input/output data to be used for an artificial intelligence/machine learning, AI/ML, -based beam management, BM, model; and
means for executing operations of the AI/ML-based BM model using the preprocessed input/output data as input/output.

15. The apparatus according to claim 14, wherein the means for pre-processing and/or executing comprises at least one of
means for using the DL Rx indicator as additional input of the AI/ML-based BM model,
means for using the DL Rx indicator as an additional aspect for network sided model data collection for model training and inference,
means for verifying the AI/ML-based BM model's at least one functionality with respect to the DL Rx indicator and the obtained measurement result,
means for masking or removing from model input at least one reception power measurement related to
DL Tx beams or Tx-Rx beam pairs with a DL Rx indicator having a different indicator value compared to a majority of indicator values of DL Rx indicators, and/or
DL Tx beams or Tx-Rx beam pairs with a DL Rx indicator having a different indicator value compared to a given minimum number of DL Tx beams and/or Tx-Rx beam pairs,
means for determining a stability metric of obtained measurement results based on a distribution of DL Rx indicators for different DL Tx beams and/or Tx-Rx beam pairs,
means for deciding to decrease a measurement and reporting periodicity based on the determined stability metric,
means for changing a beam configuration to increase or decrease a number of DL Tx beams and/or Tx-Rx beam pairs measured based on the determined stability metric, or

## Amended claims

### Amended claims in accordance with Rule 137(2) EPC.

1. An apparatus, comprising,
means for obtaining a downlink, DL, reception, Rx, indicator for measuring DL transmission, Tx, beams and/or Tx-Rx beam pairs, the DL Rx indicator indicative of a Rx antenna panel and/or a Rx beam to be used and/or used by the apparatus for reference signal measurements;
means for performing reference signal measurements on at least one received reference signal by using the Rx antenna panel and/or the Rx beam indicative in the DL Rx indicator, wherein a reference signal of the at least one received reference signal is associated with a respective Tx beam; and
means for reporting a measurement result of the performed reference signal measurements.

2. The apparatus according to claim 1, further comprising
means for determining, based on the obtained DL Rx indicator, a Rx antenna panel and/or a Rx beam to be used by the apparatus for reference signal measurements, wherein
the means for performing the reference signal measurements further comprises means for performing the reference signal measurements on the at least one received reference signal by using the determined Rx antenna panel and/or the determined Rx beam;
or wherein the means for obtaining the DL Rx indicator comprises means for determining the DL Rx indicator, wherein the Rx antenna panel and/or the Rx beam indicative in the DL Rx indicator is a Rx antenna panel and/or a Rx beam of at least one Rx antenna panel and/or at least one Rx beam used by the apparatus for the reference signal measurements,
the means for performing the reference signal measurements comprises means for performing the reference signal measurements by using the at least one Rx antenna panel and/or the at least one Rx beam, and
the means for reporting the measurement result comprises means for reporting the determined DL Rx indicator.

3. The apparatus according to claim 2, wherein the means for determining the Rx antenna panel and/or the Rx beam comprises
means for determining, based on the DL Rx indicator, the Tx antenna panel and/or the Tx beam corresponding to the RS resource related information included in the DL Rx indicator, and
means for determining the Rx antenna panel and/or the Rx beam in relation to the determined Tx antenna panel and/or the determined Tx beam.

4. The apparatus according to any of claims 2, wherein the means for obtaining the DL Rx indicator comprises
means for determining the DL Rx indicator based on a RS resource set and/or a RS resource associated with a latest UL transmission made by the apparatus, and/or
means for determining the DL Rx indicator based on a transmission configuration indicator, TCI, state of latest DL channels associated with the apparatus,
wherein the means for reporting the measurement result comprises means for reporting the determined DL Rx indicator.

5. The apparatus according to any of claims 2 to 4, further comprising
means for determining a Tx antenna panel and/or a Tx beam usable by the apparatus and related to the at least one Rx antenna panel and/or the at least one Rx beam used during the reference signal measurements,
wherein the means for determining the DL Rx indicator comprises
means for determining the DL Rx indicator to comprise RS resource related information corresponding to the determined Tx antenna panel and/or the determined Tx beam.

6. The apparatus according to any of claims 1 to 5, wherein the RS resource related information comprises
a RS resource set indicator for identifying at least one RS resource related to the Tx antenna panel and corresponding to the Rx antenna panel, and/or
at least one RS resource related to the Rx beam.

7. The apparatus according to any of claims 1 to 6, wherein
the DL Rx indicator is separately configured for different types of reference signals, and/or
the DL Rx indicator is commonly configured for two or more types of reference signals.

8. The apparatus according to any of claims 1 to 7, wherein the means for performing the reference signal measurements comprises means for measuring a DL L1- reference signal received power, RSRP, of the at least one received reference signal.

9. An apparatus, comprising,
means for transmitting at least one reference signal, wherein a reference signal of the at least one transmitted reference signal is associated with a respective Tx beam; and
means for obtaining a measurement result of reference signal measurements performed on the transmitted at least one reference signal.

10. The apparatus according to claim 9, further comprising
means for configuring a downlink, DL, reception, Rx, indicator for measuring DL transmission, Tx, beams and/or Tx-Rx beam pairs, wherein the DL Rx indicator comprises reference signal, RS, resource related information corresponding to a Tx antenna panel and/or a Tx beam usable by an endpoint terminal; and
means for providing the DL Rx indicator.

11. The apparatus according to claim 9 or 10, further comprising means for transmitting an instruction to determine the DL Rx indicator.

12. The apparatus according to any of claims 9 to 11, wherein
the means for obtaining the measurement result comprises means for obtaining a DL Rx indicator; and/or
the means for obtaining the measurement result comprises means for obtaining the measurement result based on the provided and/or obtained DL Rx indicator.

13. The apparatus according to any of claims 9 to 12, wherein the means for transmitting the at least one reference signal comprises means for transmitting
a first type of reference signal representing at least one channel state information, CSI, reference signal, and/or
a second type of reference signal representing at least one synchronization signal block, SSB, reference signal.

14. The apparatus according to any of claims 9 to 13, further comprising
means for pre-processing, based on the DL Rx indicator and the obtained measurement result, input/output data to be used for an artificial intelligence/machine learning, AI/ML, -based beam management, BM, model; and
means for executing operations of the AI/ML-based BM model using the preprocessed input/output data as input/output.

15. The apparatus according to claim 14, wherein the means for pre-processing and/or executing comprises at least one of
means for using the DL Rx indicator as additional input of the AI/ML-based BM model,
means for using the DL Rx indicator as an additional aspect for network sided model data collection for model training and inference,
means for verifying the AI/ML-based BM model's at least one functionality with respect to the DL Rx indicator and the obtained measurement result,
means for masking or removing from model input at least one reception power measurement related to
DL Tx beams or Tx-Rx beam pairs with a DL Rx indicator having a different indicator value compared to a majority of indicator values of DL Rx indicators, and/or
DL Tx beams or Tx-Rx beam pairs with a DL Rx indicator having a different indicator value compared to a given minimum number of DL Tx beams and/or Tx-Rx beam pairs,
means for determining a stability metric of obtained measurement results based on a distribution of DL Rx indicators for different DL Tx beams and/or Tx-Rx beam pairs,
means for deciding to decrease a measurement and reporting periodicity based on the determined stability metric,
means for changing a beam configuration to increase or decrease a number of DL Tx beams and/or Tx-Rx beam pairs measured based on the determined stability metric, or
means for discarding predetermined beam measurements to obtain ground truth top-1 or top-K best DL Tx beams and/or Tx-Rx beam pairs based on the determined stability metric and/or based on the DL Rx indicator.
